# EUROPEAN PATENT SPECIFICATION

(11) **EP 0 676 752 B1**
(45) Date of publication and mention of the grant of the patent: **29.11.2000**
(21) Application number: 95201292.0
(22) Date of filing: 17.05.1989
(51) Int. Cl.: G11B 9/08, G11B 11/08, G03G 5/02, G11B 11/12, H04N 5/30

(54) **Electrostatic information recording medium and electrostatic information recording and reproducing method**
Elektrostatisches Informationsaufzeichnungsmedium und elektrostatische Informationsaufzeichnungs- und -wiedergabemethode
Milieu d'enregistrement électrostatique d'information et méthode d'enregistrement et de reproduction électrostatique d'information

(30) Priority: 17.05.1988 JP 12159288; 20.05.1988 JP 12360388; 24.05.1988 JP 12755188; 24.05.1988 JP 12755288; 24.05.1988 JP 12755388; 24.05.1988 JP 12755588; 24.05.1988 JP 12755688; 24.09.1988 JP 23949088; 26.09.1988 JP 24007088; 08.12.1988 JP 31048488; 27.12.1988 JP 33022688; 28.12.1988 JP 33158988; 15.03.1989 JP 6275489; 16.03.1989 JP 6426389; 18.03.1989 JP 6724389
(43) Date of publication of application: 11.10.1995
(62) Divisional of application: 89305009.6
(73) Proprietor: DAI NIPPON PRINTING CO., LTD., Tokyo 162 (JP)
(72) Inventor: Matsuo, Makoto, c/o Dai Nippon Printing Co., Ltd., Shinjuku-Ku, Tokyo 162 (JP); Utsumi, Minoru, c/o Dai Nippon Printing Co., Ltd., Shinjuku-Ku, Tokyo 162 (JP); Iijima, Masayuki,c/o Dai Nippon Printing Co., Ltd., Shinjuku-Ku, Tokyo 162 (JP); Taniguchi, Yukio,c/o Dai Nippon Printing Co., Ltd., Shinjuku-Ku, Tokyo 162 (JP); Obata, Hiroyuki,c/o Dai Nippon Printing Co., Ltd., Shinjuku-Ku, Tokyo 162 (JP); Take, Seiji,c/o Dai Nippon Printing Co., Ltd., Shinjuku-Ku, Tokyo 162 (JP)
(74) Representative: Bubb, Antony John Allen

(56) References cited:
- EP-A- 0 249 214
- EP-A- 0 327 236
- EP-A- 0 341 668
- EP-A- 0 342 968
- DE-A- 2 440 485
- DE-A- 3 712 473
- GB-A- 799 829
- US-A- 3 865 975
- US-A- 3 992 204
- US-A- 4 095 280
- US-A- 4 207 100
- US-A- 4 296 478
- US-A- 4 409 307
- US-A- 4 757 472

## Description

### BACKGROUND OF THE INVENTION

The present invention relates to an electrostatic information recording medium and an electrostatic information recording and reproducing method, by which the information can be electrostatically recorded and reproduced at any desired time.

Conventionally, silver salt photographing method is already known as a technique for high sensitivity photographing. In this photographing method, the photographed image is recorded on film through the development process, and silver salt emulsion (such as photographic paper) is used for reproducing the image or it is reproduced on cathode ray tube (CRT) by optically scanning the developed film.

There is also an electronic photographing technique, in which an electrode is deposited on photoconductive layer by evaporation and the surface of photoconductive layer is electrically charged by corona charging in dark place. Then, it is exposed to intensive light to make the exposed photoconductive layer electrically conductive. By removing the electric charge on that portion by leaking it to form electrostatic latent image on the surface of the photoconductive layer, and the toner is attached, which has electric charge with the polarity opposite to that of the remaining electrostatic charge. This technique is mostly used for duplication purpose and is not generally suitable for photo-graphing because of low sensitivity. Since electrostatic charge carrying time is short, toner development is usually performed after electrostatic latent image is formed.

Further, there is the method for TV photographing technique, in which photographing is performed by the image pickup tube and the image information obtained by optical semiconductor is taken out as electric signal. This is directly outputted on CRT or is recorded on video by magnetic recording and the image is reproduced on CRT when desired.

Also, a method is known, in which thermoplastic materials having electric charge carrying property are laminated on transparent electrode and selenium particles are deposited by vacuum evaporation on the surface of the thermoplastic material and is infiltrate to prepare the recording medium. To record the information on this recording medium, the surface of the thermoplastic material is electrically charged by corona charging, and the image is exposed to light by applying voltage between the electrodes disposed at face-to-face positions. Thus, optical carrier is generated on the photoconductive particles in the exposure portion to form the latent image. For the development, the thermoplastic material is softened by heating, and only the photoconductive particles generating oprical carrier are migrated in the thermoplastic material layer. The information thus developed are reproduced as visible information according to the quantity of transmission light. (U.S. patent specifications No. 3,520,681, 4,101,321 and 4,496,642)

Silver salt photographing method is an excellent means to preserve the image of the object, but it requires a development process to form the silver salt image and also the complicated optical, electrical and chemical processings are involved in reproducing the image to hard copy and soft copy (CRT output), etc.

The electronic photographing technique is more simple and quicker than the silver salt photographing method in reproducing the electrostatic latent image, whereas the latent image can be preserved only for short period, and the dissociation of the development, image quality, etc. are inferior to those of silver salt method.

TV photographing technique requires linear sequential scanning to take out and record the electric image signals obtained by the pickup tube. Linear sequential scanning is performed by electron beam in the pickup tube and by magnetic head in video recording. Since resolution depends upon the number of scanning lines, it is extremely inferior to the planar analog recording such as silver salt photographing.

The recently developed TV image pickup technique using solid-state image sensor (such as CCD) is also essentially the same with regard to the resolution.

The problems involved in these techniques lie in the fact that the processing becomes more complicated if higher quality and resolution are required in the image recording and the memory function is lacking or image quality is basically poor if the processing is simplified.

There is another technique, in which thermoplastic material layer containing selenium particle layer is provided on the transparent electrode and it is electrically charged by corona charging. After the image is exposed, thermoplastic material is softened and the image is heat-developed, and the information is reproduced as visible information. In this case, the electric charge information thus accumulated can be preserved for long period (10 years or more), whereas the application is limited as information recording means by camera because corona charging is needed for information recording. Also, on the surface of thermoplastic resin softened during heat development, the so-called frost phenomenon occurs, in which fine irregularities are caused by the repulsion between the surface electric charge, when it is electrically charged to higher potential. As the result, when the accumulated information is detected as surface potential, noise occurs and the resolution is adversely affected.

There is also known, see EP-A-0341668 relevant under Article 54(3) EPC an electrostatic information recording and reproducing method and apparatus, wherein a photosensitive member comprising a photoconductive layer having an electrode on a front surface thereof and an electrostatic information recording medium comprising a charge retaining layer having an electrode on a back surface thereof are disposed in face to face relation and information exposure is performed from the photosensitive member side with a voltage applied between both electrodes, the electrostatic information recording medium being separated from the photosensitive member to reproduce and output a surface potential recorded on the electrostatic information recording medium.

In addition, there is further known, see US-A-4296478, an electrostatic information recording medium comprising a highly insulating charge retaining layer stacked on an electrode.

It is an object of the present invention to provide a new electrostatic information recording and reproducing method and apparatus, which can produce an image of high quality at high resolution and in which the processing is simple and easy, whereby the recording can be achieved for a long time and the characters, line drawings, images, codes and (1, 0) information can be reproduced arbitrarily in appropriate quality. Such a method and apparatus is provided by the features of Claims 1, 2 and 6.

A further object of this invention is to provide an electrostatic information recording medium having excellent charge carrying property. Such a medium is provided by the features of Claim 3.

There invention is illustrated by way of example in the accompanying drawings, in which:
Fig. 1 is a cross-sectional view of an electrostatic information recording medium for use in the present invention,
Fig. 2 is a perspective view of various types of flexible electrostatic information recording medium for use in this invention,
Fig. 3 is a cross-sectional view of an electrostatic information recording medium in accordance with this invention,
Fig. 4 is a cross-sectional view of a photosensitive member used for the electrostatic information recording and reproducing method of this invention,
Fig. 5 and Fig. 6 are the cross-sectional views of the other photosensitive members used for the electrostatic information recording and reproducing method of this invention,
Fig. 7 is a schematical drawing of an electrostatic information recording apparatus to be used for the electrostatic information recording and reproducing method of this invention,
Fig. 8 is a drawing to show approximate configuration when the electrostatic information recording apparatus is used as an electrostatic camera,
Fig. 9 is a drawing giving the configuration of color-separating optical system,
Fig. 10 is an explanatory view of the case where color electrostatic latent image is formed,
Fig. 11 is a drawing to explain the electrostatic information recording and reproducing method of this invention,
Fig. 12 and Fig. 13 are the drawings to show the electrostatic information recording card of this invention.
Fig. 14 is a drawing to explain the method to prepare a-Si: H photosensitive member, and
Fig. 15 is a drawing to show electric charge carrying property of the electrostatic information recording medium prepared by Example 10 (a).

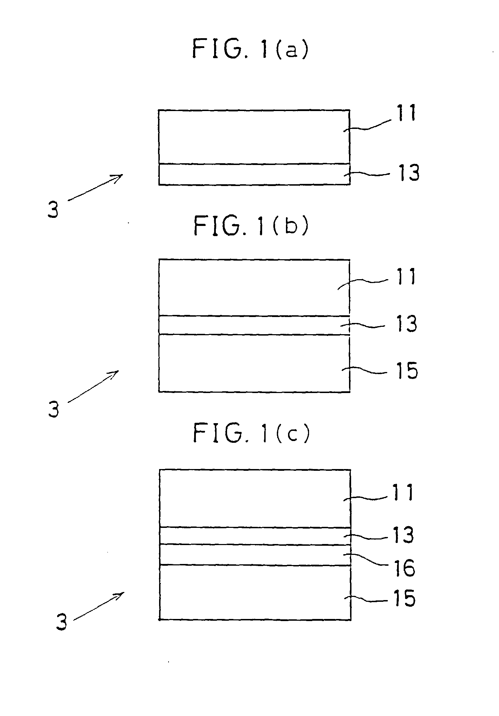

An electrostatic information recording medium 3 for use in the present invention will be explained in connection with Fig. 1.

The electric charge carrying layer 11 consists of macromolecular material with high insulating property to suppress the migration of electric charge, and it must have specific resistance of 10¹² Ω ·cm or more.

As the macromolecular material to constitute the electric charge carrying layer, it is essential that glass transition temperature is higher than the operating environmental temperature, and it is preferable that glass transition temperature is 20°C - 100°C at normal operating environment.

As the macromolecular material to constitute the electric charge retaining layer, it is necessary that the water absorption ratio is lower than 0.4% to prevent the leakage of the accumulated information electric charge by the influence of humidity.

As such macromolecular materials, thermoplastic resin, thermosetting resin, ultraviolet setting resin, electron beam setting resin or engineering plastics can be used.

As thermoplastic resin, the following compounds may be used: Polyethylene, vinyl chloride resin, polypropylene, styrene resin, ABS resin, polyvinyl alcohol, acryl resin, acrylonitrile-styrene resin, vinylidene chloride resin, AAS (ASA) resin, AES resin, cellulose derivative resin, thermoplastic polyurethane, polyvinyl-butyral, poly-4-methylpentene-1, polybutene-1, rosin ester resin, etc. Further, fluorine resin, e.g. polytetrafluoroethylene, ethylene-propylene fluoride, tetrafluoroethylene-perfluoroalkylvinylether copolymer, and the dispersion types or degenerated type (coating type) of these compounds, or polyether-ketone resin, polyparaxylylene expressed by the following structural formulae: 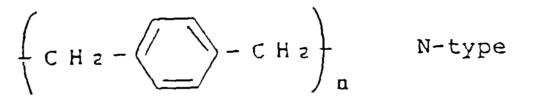 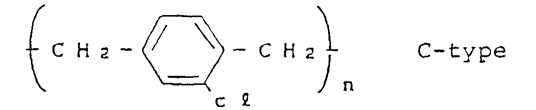 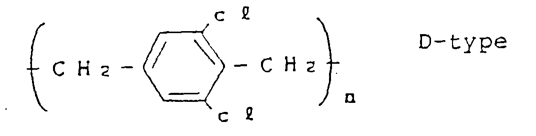 (C-type as described above may be, in addition to the compounds of the above structure, the compounds, in which one of the sites other than the main chain bonding site in benzene ring is substituted by chlorine, or D-type may be the compound, in which two of such sites are substituted by chlorine.)

As thermosetting resin, the following compounds can be used: Unsaturated polyester resin, epoxy resin, phenol resin, urea resin, melamine resin, diallyl phthalate resin, silicone resin, etc.

As energy ray setting resins such as ultraviolet setting resin, electron beam setting resin, etc., there are radical polymerized acrylate compounds, e.g. ester compounds of acrylate, metacrylate or their derivatives and having hydroxyl groups on both ends, e.g. hydroxyethyl acrylate, hydroxypropyl acrylate, hydroxybutyl acrylate, hydroxyethyl metacrylate, hydroxypropyl metacrylate, hydroxybutyl metacrylate, 4-hydroxy-cyclohexyl acrylate, 5-hydroxy-cyclooctylacrylate, 2-hydroxy-3-phenyloxypropyl acrylate, (meta) acrylic acid ester compound having one polymerized unsaturated group, and the compound having two polymerized unsaturated groups expressed by the following formula:

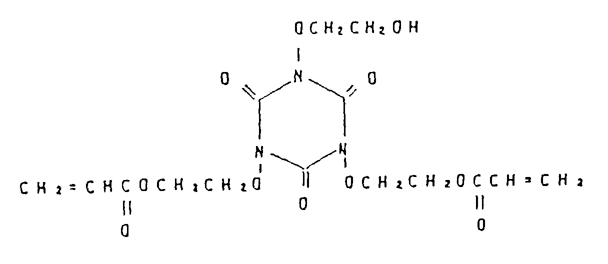

As the setting compounds having two hydroxyl groups and one or two or more radical polymerized unsaturated groups, glycerol metacrylate or the acrylates expressed by the formula: 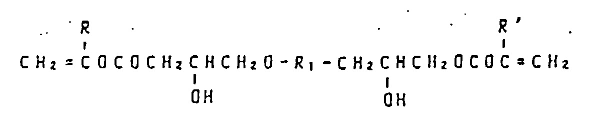 may be used. (Here, R and R' refer to methyl group or hydrogen, and R₁ to short-chain diol residual group such as ethyleneglycol, propylene glycol, diethyleneglycol, butanediol, 1, 6-hexanediol, etc.

As engineering plastics, polycarbonate, polyamide, acetal resin, polyphenyleneoxide, polybutylene terephthalate, polyethylene terephthalate, polyethylene naphthalate, polyphenylene sulfide, polyimide resin, polysulfone, aromatic polyester, polyacrylate, etc. can be used.

In the resins as described above with high water absorption ratio, the absorption ratio can be decreased by introducing the atoms or substituents furnished with water non-absorbing property. Or, such resin may be used by mixing with the resin with lower water absorption ratio. The materials with high water absorption ratio such as polyether sulfone, polyimide, polyparabanic acid, etc. can be used by laminating the protective film of the resin with lower water absorption ratio.

As the laminating method of electric charge retaining layer, there are the methods to laminate the layers by depositing resin or rubber on the electrode 13 by vacuum evaporation, by coating or dippingor by sputtering in case of electrostatic information recording medium as shown in Fig. 1 (a).

For the electric charge retaining layer 11, silicon film, polyester film, polyimide film, fluorine-containing polymer film, polyethylene film, polypropylene film, polyparabanic acid film, polycarbonate film, polyamide film, etc. may be bonded with bonding agent to form the laminate layers. Or, the electrode layer may be formed on one side of the film by vacuum evaporation, sputtering or coating. In this case, the layer to protect the electrode layer may be provided. If mechanical strength is required, the film or the like with higher mechanical strength may be bonded with it.

The electrode 13 is laminated on the support member 15 as shown in Fig. 1 (b) or on the support member 15 as shown in Fig. 1 (c) through the bonding layer 16, and there is no restriction of the material except that it must have specific resistance of 10⁶ Ω·cm or less. It should be inorganic metal conductive film,inorganic metal oxide conductive film, or organic conductive film such as tertiary ammonium salt. Such electrode of electrostatic information recording medium is formed on the support member by various methods such as vacuum evaporation, sputtering, CVD, coating, metalplating, dipping, electrolytic polymerization, etc. It is necessary to change the film thickness according to electrical property constituting the electrode or by the applied voltage at the recording of information. For example, it is 100 - 3000 Å in case of aluminum, and it is determined according to the pattern of the total surface between the support member and the electric charge retaining layer or to the pattern of the electric charge retaining layer. As shown in Fig. 1 (a), the film may be laminated by the same procedure as the electric chargeretaining layer if the electric charge retaining layer has a constant strength. The support member is not required in this case. Or, the electrode may be detached after the information has been recorded on the electric charge retaining layer and it may be laminated again at the time of information reproduction.

The support member 15 is to support the electrostatic information recording medium 3, and there is no restriction to its material and thickness, provided that it has the strength enough to support the electric charge retaining layer. For example, flexible plastic film, metal foil, paper or rigid substances such as glass, plastic sheet, metal plate (also to be used as electrode) may be used, and light transmission property is also required. Actually, when the electrostatic information recording medium 3 takes the form of flexible film, tape or disk, the flexible plastic film is used. In case higher strength is required, inorganic material with rigidity such as sheet, glass, etc. are used.

In case light transmission property is required, the anti-reflection film may be provided or the film thickness of electrode layer or electric charge retaining layer may be adjusted, or the reflection protective effect may be given by combining both.

The electrostatic information recording medium 3 is to record the information on the electric charge retaining layer 11 as the distribution of electrostatic charge. Therefore, the electrostatic information recording medium may take various forms according to the information to be recorded or the recording method. For example, when it is used for electrostatic camera, it takes the form of normal film (for single frame or continuous frame) or disk. When digital information or analog information is recorded by laser or the like, it takes the form of tape, disk or card.

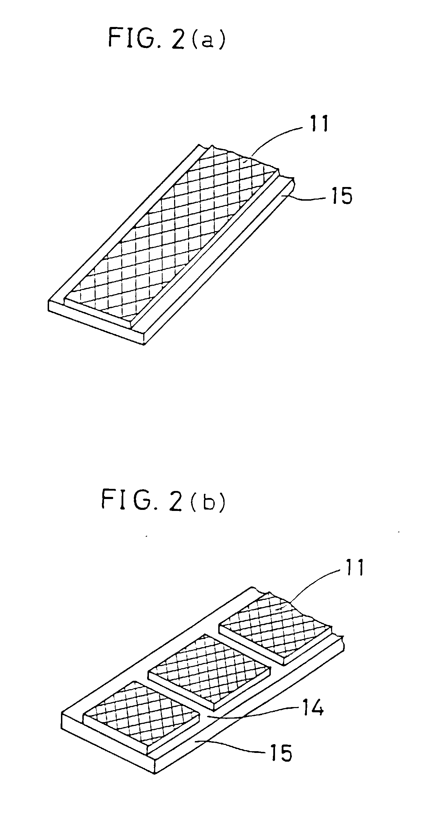

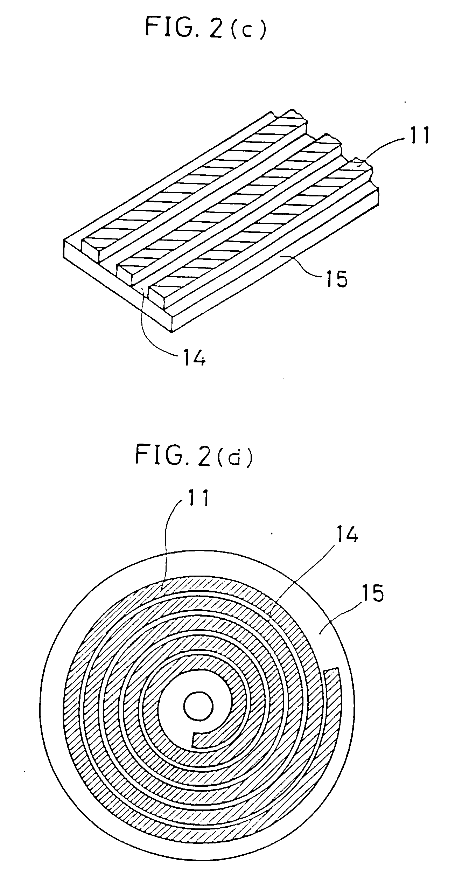

In the following, description is given for the case where the electrostatic information recording medium 3 takes the form of flexible film, tape or disk. Fig. 2 (a) shows a type of the medium, in which the recording portion, i.e. the electric charge retaining layer 11, is continuous.

This is formed by providing the electric charge retaining layer on the support member such as plastic film equipped with the electrode layer, leaving only both edges of it. This electrostatic information recording medium has the length at least longer than that of one picture to be recorded (e.g. one frame in case of camera photographing, or track width in case of digital information recording) . Naturally, this includes the combination or bonding of two or more electrostatic information recording media in longitudinal direction. In this case, there may be a slit zone between the adjacent electric charge retaining layers, where the retaining layer is partially lacking.

On the other hand, there is discontinuous type, as shown in Fig. 2 (b), where the electric charge retaining layer 11 is discontinuous in longitudinal direction.

This is formed by providing the electric charge retaining layer discontinuously on the support member such as plastic film in longitudinal direction, leaving both edges of the support member or without leaving them. On the support member, two or more electric charge retaining layers are formed in a certain size. The size of the electric charge retaining layer differs according to the image or the exposure method of the information input unit. In case of camera photographing, it is 35 mm × 35 mm, and it is the track width of the digital information recording in case of the spot input such as laser beam. In case of digital information recording, the cutaway portion of the electric charge retaining layer formed between the adjacent electric charge retaining layers can be utilized as the tracking zone for input/output of the information. Naturally, this includes the combination or bonding of two or more electrostatic information recording media in longitudinal direction. In such case, there may be a slit zone between the adjacent electric charge retaining layers, lacking a part of it.

As shown in Fig. 2 (c), there is the case where the electric charge retaining layer is discontinuous to lateral direction.

In such case, the electric charge retaining layer is formed discontinuously in lateral direction on the support member such as plastic film equipped with electrode layer, leaving both edges of the support member or without leaving them. Thus, two or more band-like electric charge retaining layers are formed on the support member. The width of the electric charge retaining layer is equal either to the track width of digital information to be recorded or to the width multiplied by integral number, and the cutaway portion of the electric charge retaining layer formed between the adjacent electric charge retaining layers is utilized as the tracking zone for input/output of the information.

As shown in Fig. 2 (d), there is also a disk type.

In this case, the electric charge retaining layer is provided totally on the support member such as circular plastic film equipped with electrode layer either totally or leaving spiral cutaway portion of continuous spiral electric charge retaining layer. In such electrostatic information recording medium, circular cutaway portion may be formed for the driving of input/output device. In case of digital information recording, the cutaway portion of the electric charge retaining layer in continuous and spiral form can be used as the tracking zone for input/output of the information.

Next, description is given of a second electrostatic information recording medium for use in this invention.

In this case, the electric charge retaining layer of the electrostatic information recording medium is formed by single mono layer or built-up layers

Because LB film 11 is to record the information on its surface or in the interior as the distribution of electrostatic charge, high insulating property is required to suppress the migration of electric charge and must have the insulating property of 10¹² Ω·cm or more in specific resistance.

As the organic compounds forming the mono layer or built-up layers, the organic compounds capable to form LB film with specific resistance of 10¹² Ω·cm or more, e.g. carbonic acids, amines, alcohols, silicon compounds, phosphoric acid derivatives, sulfonic acids, cellulose derivatives, polymers, etc. can be used.

As the carbonic acids, for example, there are tetradecyl benzoate, 2-nitro-5 (N-methyl) aminobenzoate, 2-nitro-5 (N-octadecyl) aminobenzoate, vinyl stearate, β-parinallic acid, trans-13-docosenoic acid, ω-tricosenic acid, glycine-octadecyl alcohol ester, 2,4-octadecadienic acid, octadecyl fumaric acid, octadecyl maleic acid, ω-tricosenic acid, perfluorodecanic acid, perfluorononaic acid, perfluorooctanic acid, perfluoroheptanic acid, cartinonic acid, 2-hexadecanic acid, n-octadecylacrylate, vinyl stearate, octadecyl acrylate, glycine octadecyl ester, alanine octadecylester, 2-lysine, and the substances having the following structural formulae:

(1) CH₃(CH₂)₈C ≡ C - C ≡ C(CH₂)₈COOH,

(2) CH₃(CH₂)₁₇C ≡ C - C ≡ CCOOH,

(3) CH₃(CH₂)₉C ≡ C - C ≡ C(CH₂)₈COOH,

(4) CH₃(CH₁₂)₁₁C(CH₂CH₂COOMe)₂ - C ≡ C - C(CH₂CH₂COOMe)₂(CH₂)₈COOH,

(5) CH₃(CH₂)₁₅C ≡ C - C ≡ C(CH₂)₈COOH,

(6) CH₃(CH₂)₇CH = CH(CH₂)₇COOH,

(7) CH₂ = CH(CH₂)₁₅COOH,

(8) CH₂(CH₂)₁₆COOCH = CH₂,

(9) HOOC(CH₂)₁₆COOCH₃,

(10) CH₃OOCCH = CHC(CH₃) = CHCH = CH(CH₃)C = CHCH = C(CH₃)CH = CHCH = C(CH₃)CH = CHCH = C(CH₃) - CH(CH₃) = CHCOOH,

(11) CH₂ = CH(CH₂)₂₀COOH,

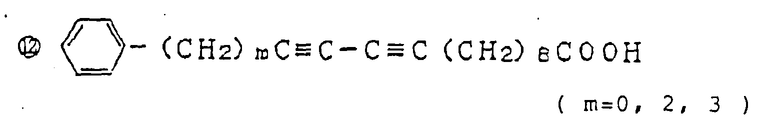

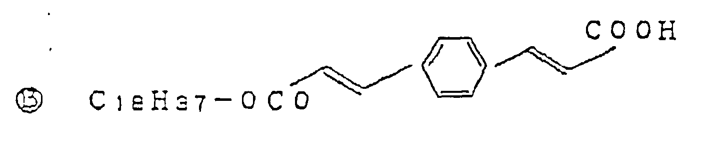

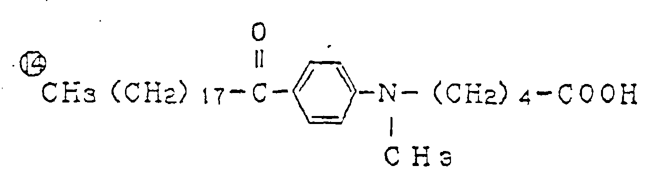

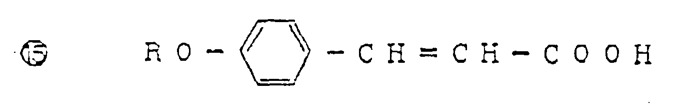

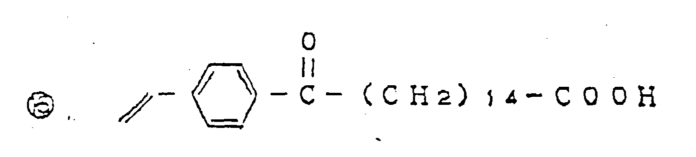

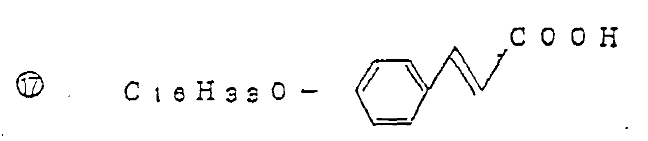

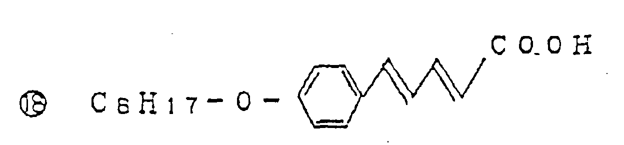

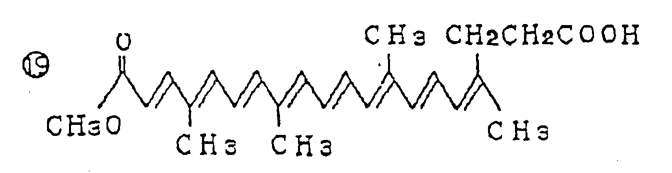

Of the carbonic acids as described above, its salt also can be used if the substance is acid.

As the phosphate derivatives, the following substances can be used: Distearoyl-phosphatidyl-choline, dipalmitoyl-phosphatidylcholine, cholesterol, 1-palmitoyl-2-oleyl-SN-glycel-3-phosphacholine, L-α-dimyristyl-phosphatidic acid, L-α-dilauryl-phosphatidic acid, DL-α-dimyristoyl-phosphatidyl-ethanolamine, DL-α-dilauryl-phosphatidylcholine, DL-α-dipalmitoyl-nitrobenzoxadiazole-phosphatidylethanolamine, dioleoyl-phosphatidylcholine, dipalmitoyl-lecithine, dimyristyl -lecithine, dipalmitoyl-phosphatidylethanolamnine, dipalmitoyl-phasphatidylethanolamine, dipalmitoyl-phosphatidylcholine and the substances expressed by the following structural formula:

CH₃(CH₂)₁₇OPO(OH)₃

As the cellulose derivatives, the following substances can be used: Cellulose triacetate, cellulose tricaprylate, cellulose tricaprate, cellulose trilaurate, cellulose dilaurate, and cellulose tripalmitate. As the polymers, there are: Poly-1-benzyl-L-histidine, poly-γ-benzyl-1-glutamate, polyoctadecyl-metacrylate, polyoctadecyl-acrylate, polymethyl-metacrylate, poly-γ-methyl-L-glutamate, polyimide, poly (n-octadecylvinylether/maleic acid anhydride), poly (octadecene-1/maleic acid anhydride), poly (styrene/maleic acid anhydride), poly-γ-methyl-L-glutamate, polystyrene, and the substances expressed by the following formulae:

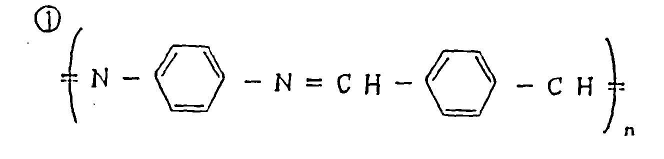

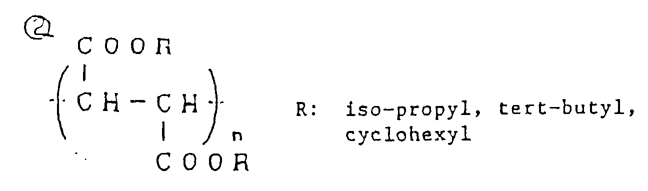

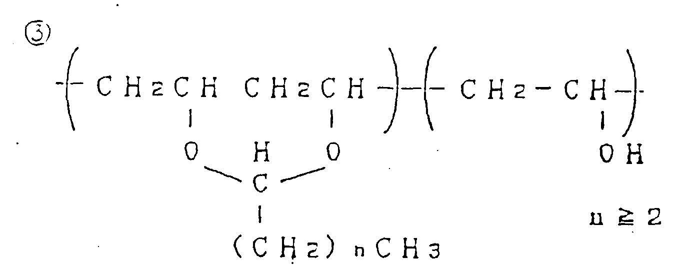

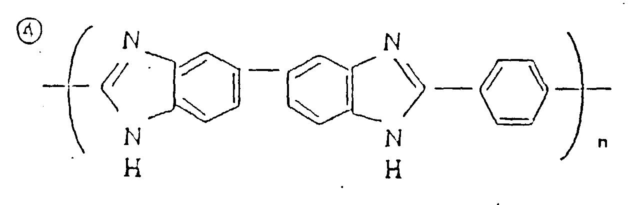

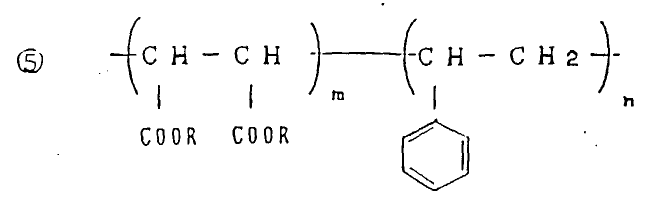

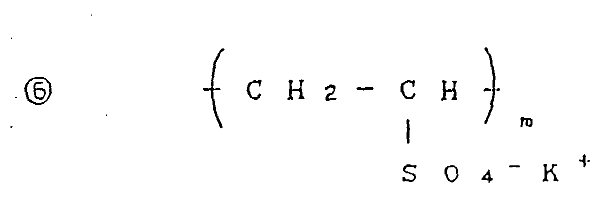

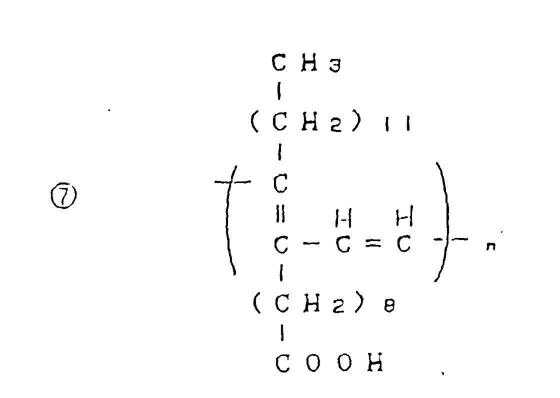

As cyloxanes, the substances given by the following formulae can be used:

① CH₃(CH₂)₁₇SI(Cl)₃,

② CH₃(CH₂)₁₇SI(OH)₃,

③ CH₃(CH₂)₇CH = CH(CH₂)₇SI(Cl)₃,

④ CH₃(CH₂)₇CH = CH(CH₂)₇SI(OH)₃,

⑤ CH₃OCO-(CH₂)₂₂SI(Cl)₃,

⑥ CH₃OCO-(CH₂)₂₂SI(OH)₃,

Or the substances expressed by the following structural formula can be used:

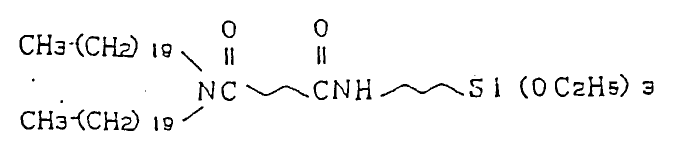

In addition, the substances given by the following structural formulae can be used: 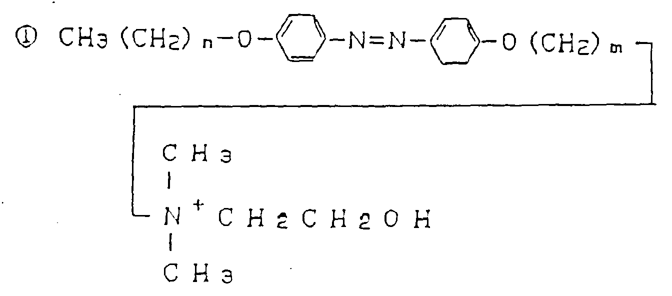 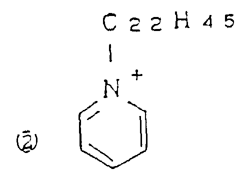 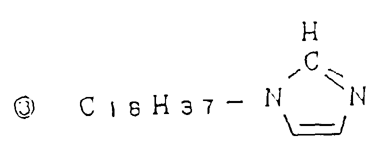 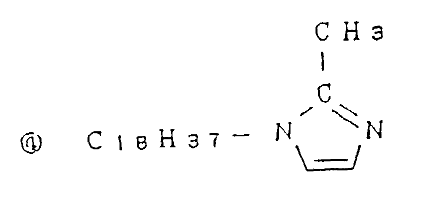 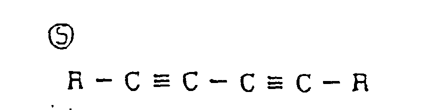 R is : 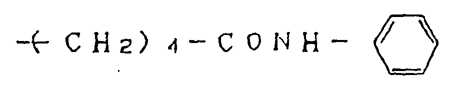 or

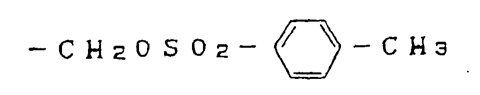

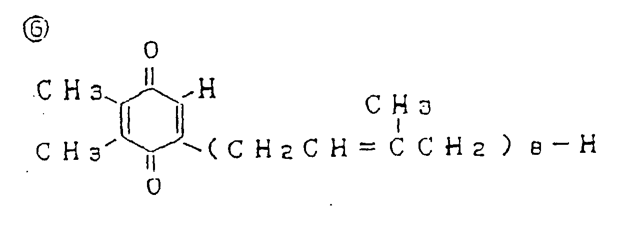

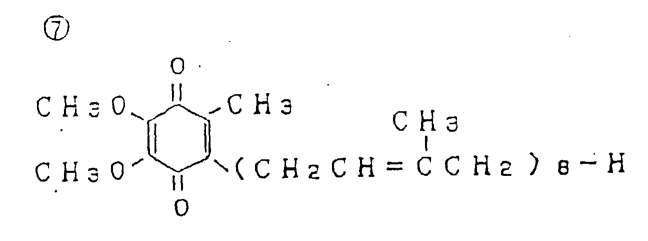

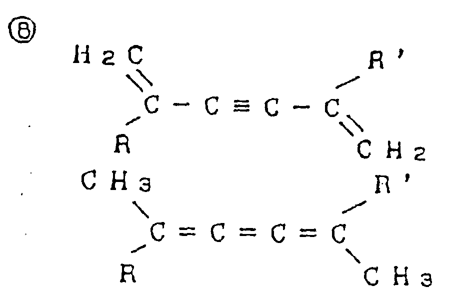

R and R' as described above are:
When R = R', 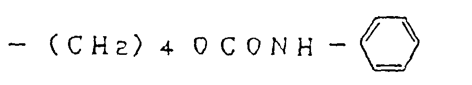 or, 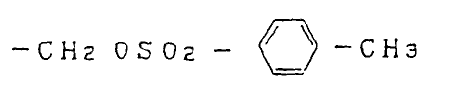 or, 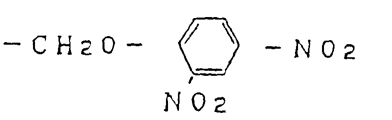 Or, when R ≠ R',
R is: 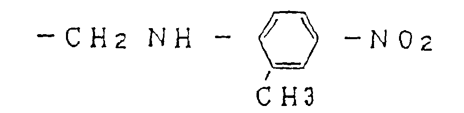 R' is:

- (CH₂)₈ CONH C₂H₅

Or,
R is: 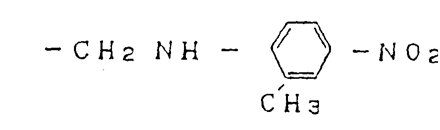 R' is:

- (CH₂) ₂ CONH C₂H₅

Or,
R is: 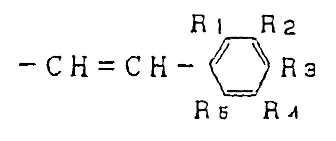 R' is:

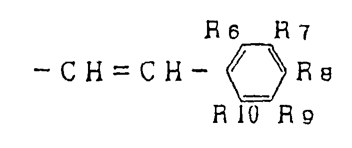

To form mono layer on the electrode surface, the solution of the above compounds in organic solvent is dropped onto water by Langmuir-Blodgett's method to deposit and form mono layer on aqueous phase. Thus, the following substances can be used: The substances formed by shifting the mono layer to the surface of clean electrode under the constant superficial pressure when monomolecules are lined up along the interface, the substances formed by immersion of electrode plate in the solution such as silane coupling agent already known and used for chemical combination of organic polymer and inorganic material, and the substances formed by the known means to form mono layer film such as the deposition of organic compounds on the surface of the electrode and the adsorption of the mono layer The thickness of mono layer is the size of the constituent molecule, i.e. about 20 - 100 Å. In case of built-up layer, the layers thickness is a multiple of the thickness of mono layer corresponding to the cumulative frequency.

In forming the mono layer or built-up layers by LB method, it is formed, for example, by general means as described in "The New Experimental Chemistry Course: Vol. 18; Interface and Colloids", pp. 498 - 507 (Maruzen). As the method to align monomolecules in the built-up layers,there are the method to adsorb the lipophilic group on electrode surface, the method to adsorb the hydrophilic group on electrode surface, or the method to laminate on these monomolecular films from the side of lipophilic group or from hydrophilic group (the so-called, X, Y, or Z-type).

The above polymers without hydrophilic group can be formed by placing LB film on the baseplate. In case of polystyrene, for instance, it is dropped on water surface and mono layer is formed, and the attached baseplate is brought into contact with water surface in parallel.

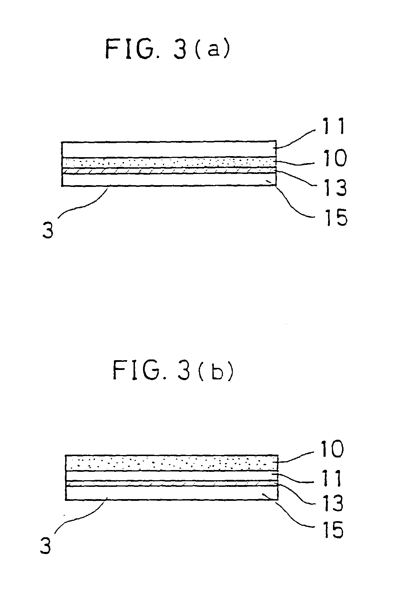

An embodiment of an electrostatic information recording medium according to this invention is described in connection with Fig. 3.

An electric charge retainability reinforced layer 10 of the electrostatic information recording medium consists of inorganic insulating film, organic mono insulating layer, organic insulating mono layer or built-up layers with film thickness within the range of 10 -1000 Å. It should have such film thickness and material quality that the information electric charge accumulated by electrode or discharge goes into it by the action of the electrode or discharge goese into it by the action of the electric field generated without electric charge injection is formed by the insulating material and must have film thickness of 100 Å or more, and it should have such film thickness or material quality that the information electric charge does not go into it by the action of the electric field generated by the information electric charge.

The electric charge retainability reinforced layer 10 is defined as the layer, into which electric charge enters when strong electric field (10⁴ V/cm or more) is applied but it does not enter when low electric field (less than 10⁴ V/cm) is applied. As the electric charge retainability reinforced layer, SiO₂, SiO₂O₃, SiC, SiN, etc. can be used. As organic substances, polyethylene vacuum-deposited film or polyparaxylylene vacuum-evaporated film can be used. Also, as organic insulating monomolecular film or monomolecular built-up film, aromatic compounds with specific resistance of 10¹² Ω·cm or more, e.g. carbonic acid derivatives of styrene, ω-phenylic acid, or cadmium arachidiate, are laminated in 1 - 10 layers by Langmuir-Blodgett's technique and used.

In order to stabilize the electrostatic charge, it is preferable to add the substance having electron donating property (donor material) or the substance with electron accepting property (acceptor material) to the insulating layer 11 without electric charge injection. As donor materials, there are the compounds such as styrene, pyrene, naphthalene, anthracene, pyridine, azine, etc. Actually, the compounds such as tetrafluvalene (TTF), polyvinylpyridine, polyvinyl-naphthalene, polyvinylanthracene, polyazine, polyvinylpyrene, polystyrene, etc. are used in single compound or in mixture. As the acceptor materials, there are halogen compounds, cyanide compounds, nitro compounds, etc. Actually, the compounds such as tetra-cyanoquinodimethane (TCNQ), trinitrofluorenone (TNF), etc. are used in single compound or in mixture. Donor material or acceptor material is added to resin by about 0.001 - 10%.

In order to stabilize the electrostatic charge, single element particles may be added to the insulating layer. As the single element, the following elements are used: I A group (alkali metals), I B group (copper group), II A group (alkali earth metals), II B group (zinc group), III A group (aluminum group), III B group (rare earth group), IV B (titanium group), V B group (vanadium group), VI B group (chromium group), VII B group (managanese group), VIII group (iron group and platinum group), or silicon, germanium, tin, lead as IV A group (carbon group), antimony, bismuth as V A group (nitrogen group), sulfur, selenium and tellurium as VI A group (oxygen group). These are used in fine powder. Of the elements as described above, the metals can be used in the forms of metallic ions, fine powder alloy, organic metal or complex. Further, the above elements can be used in the forms of oxides, phosphates, sulfonated compounds or halogenated compounds. These additives may be added in small quantity to the electrostatic information recording medium made of resin, rubber, etc., and the added quantity may be 0.01 - 10 weight % to the electrostatic information recording medium.

The insulating layer must have the thickness of at least 1000 Å (0.1 µm) from the viewpoint of insulation and less than 100 µm from the viewpoint of flexibility.

The electrostatic information recording and reproducing or playing-back processes according to the present invention will now be explained.

Basically, the electrophotographic information recording system used to this end comprises an electrostatic information recording medium and a photosensitive member located in opposition thereto.

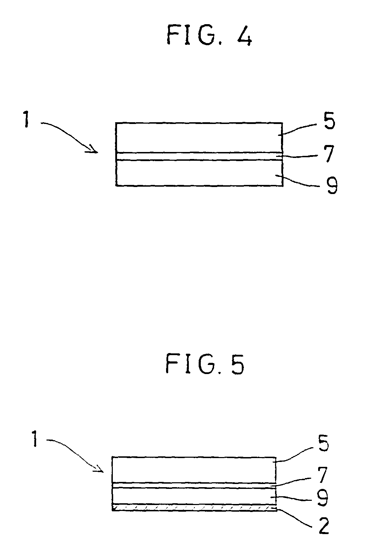

When irradiated with light, a photoconductive layer 9 forming a photosensitive member 1, as shown in Figure 4, generates light carriers (electrons, positive holes) from the irradiated region, which can migrate widthwise therethrough. The layer 9 is more effective esp. in the presence of an electric field. The layer 9 may be formed of an inorganic photoconductive material, an organic photoconductive material, a composite type of inorganic/organic photoconductive material thereof and so on.

Such photoconductive materials and the formation of the photoconductive layers will now be explained.

### (A) Inorganic Photosensitive Member (Photoconductor)

Inorganic photosensitive materials used may include amorphous silicon, amorphous selenium, cadmium sulfide, zinc oxide and so on.

### (a) Amorphous Silicon Photosensitive Member

The amorphous silicon photosensitive member may be formed of:
(i) Hydrogenated amorphous silicon (a-Si:H), and
(ii) Fluorinated amorphous silicon (a-Si:F) which is not doped with impurites, is doped with B, Al, Ga, In, Tl or the like into a p-type (a hole transfer type), or is doped with P, Ag, Sb, Bi or the like into an n-type (an electron transfer type).

For the formation of a photosensitive layer, silane and impurity gases may be introduced with a hydrogen gas, etc. into a low vacuum atmosphere (10⁻² to 1 Torr) to deposit them on an electrode substrate heated or not heated by glow discharge into a film, or may be formed on a simply heated electrode substrate through thermochemical reactions. Alternatively, the starting solid material may be formed into a film by vapor deposition or sputtering. The obtained film may be used in the form of a single or laminated layers. The film may have a thickness of 1 to 50 µm.

A transparent electrode 7 may be provided on its surface with a charge blocking layer which, when not exposed to light, serves to prevent charges from being injected from the transparent electrode 7 , as if exposed to light. For that purpose, an insulating layer or layers such as a-SiN, a-SiC, SiO₂ and Al₂O₃ layers may be formed on one or both of the electrode substrate and the uppermost (surface) layer of the photosensitive member by glow discharge, vapor deposition, sputtering or other suitable means. The insulating layer(s) is (are) required to have a thickness of at least 3000 Å or below, since too an increased thickness prevents charges formed by exposure from passing through the insulating layer, with the result that they are accumulated in the photosensitive member in the form of space charges. It is preferred that the insulating layer(s) has (have) a thickness of 100 to 1000 Å by reason that it (they) is (are) then easy to prepare.

Preferably, the electrode substrate may be formed as the charge blocking layer with a charge transport layer capable of transporting charges of polarity opposite to that of the electrode substrate, making use of a rectifying effect. If the electrode is negative, a hole transport layer may then be provided, and if the electrode is positive, an electron transport layer may then be provided. For instance, a-Si:H (n⁺) wherein Si is doped with boron has hole transport properties so increased that it produces a rectifying effect, and so functions as a negative charge blocking layer.

### (b) Amorphous Selenium Photosensitive Member

Photosensitive amorphous selenium includes (i) amorphous selenium (a-Se), (ii) amorphous selenium tellurium (a-Se-Te), (iii) amorphous arsenic selenium (a-As₂Se), (iv) amorphous arsenic selenium Te (a-As-Se-Te) or the like.

This photosensitive film may be prepared by vapor deposition or sputtering, and an SiO₂, Al₂O₃, SiC or SiN layer may be formed on an electrode substrate as the charge blocking layer by vapor deposition, sputtering, glow discharge or other suitable means. Alternatively, the above substances (i) to (iv) may be used in combination and formed into a laminated type of photosensitive member. The photosensitive member may have a similar film thickness as stated in connection with the amorphous silicon photosensitive member

### (c) Cadmium Sulfide (CdS)

This photosensitive member may be prepared by coating, vapor deposition or sputtering. For vapor deposition, solid particles of CdS may be placed on a tungsten boat and vapor-deposited thereon by resistance heating or EB (electron beams). For sputtering, a CdS target may be used to deposit on a substrate in argon plasma. In this case, CdS is usually deposited in an amorphous state, but it may be possible to obtain a crystalline oriented film (oriented in the thickness direction) by selecting the conditions for sputtering. For coating, CdS particles (having a particle size of 1 to 100 µm) dispersed in a binder with the addition of a solvent may be coated on a substrate.

### (d) Zinc Oxide (ZnO)

This photosensitive member may be prepared by coating or CVD. For coating, ZnO particles (having a particle size of 1 to 100 µm) dispersed in a binder with the addition of a solvent may be coated on a substrate. For CVD, an organic metal such as diethyl zinc or dimethyl zinc is mixed with an oxygen gas in low vacuum (10⁻² to 1 Torr) and subjected to chemical reactions on an electrode substrate heated (to 150 to 400 °C), whereby it is deposited thereon in the form of a zinc oxide film, which is again oriented in the thickness direction.

### (B) Organic Photosensitive Member

The organic photosensitive member is broken down into single-layer and function-separated types.

### (a) Single Layer Type of Photosenstive Member

The single layer type of photosensitive member comprises a mixture of a charge generator substance with a charge transporter substance.

### Charge Generators

The charge generators are substances having the property of absorbing light to generate charges and transmitting such charges to the charge transporter substances. Used to this end are substances based on azo pigments, bis-azo pigments, trisazo pigments, phthalocyanine pigments, perylene pigments, triphenylmethane dyes, styryl dyes, azulenium salt pigments, squalenium salt pigments, methine pigments, pyrylium dyes, cyanine dyes and methine dyes.

### Charge Transporters

The charge transporters are substances capable of satisfactorily transporting ionized charges. Used to this end are substances based on hydrazones, pyrazolines, polyvinyl carbazoles, carbazoles, stilbenes, anthracenes, naphthalenes, tridiphenylmethanes, azines, amines, aromatic amines, oxadiazoles, triazoles, polycyclic aromatics and the like.

A charge-transfer complex may also be formed from the charge-generating and transporting substances.

Usually, photosensitive members have their photosensitive characteristics determined by the light absorption properties of the charge-generating substances. However, the complexes obtained by mixing the charge generating substances with the charge transporting substances have their light absorption properties varied. For instance, polyvinyl carbazole (PVK) is only sensitive in an ultraviolet region and trinitrofluorenone (TNF) is only sensitive in the vicinity of a 400-nm wavelength region, but a PVK-TNF complex is sensitive even to wavelength regions of up to 650 nm.

Preferably, such a single layer type of photosensitive member has a film thickness of 10 to 50 µm.

### (b) Function-Separated Type of Photosensitive Member

The charge-generating substances tend to absorb light to generate charges but have the property of trapping charges, whereas the charge-transporting substances have superior charge-transporting characteristics but are inferior in the charge-generating properties due to light absorption. For that reason, both the substances are separated from each other to make much use of their individual properties. A charge generating layer is thus laminated on a charge transporting layer, and vice versa.

In order to make the function-separated type of photosensitive member, the charge-generating substance is first dissolved or dispersed with a binder in a solvent and the resulting coating solution is spread on an electrode to form a charge generating layer. Then, the charge transporting substance is likewise dissolved or dispersed with a binder in a solvent and the resulting coating solution is spread and then dried on the charge generating layer to form a charge transporting layer. Preferably, the charge generating layer may have a film thickness of 0.1 to 10 µm, while the charge transporting layer may be of 10 to 50 µm in film thickness.

Binders used for both the single-layer and function-separated types of organic photosensitive members may include, for instance, silicone resins, styrene/butadiene copolymer resins, epoxy resins, acrylic resins, saturated or unsaturated polyester resins, polycarbonate resins, polyvinyl acetal resins, phenolic resins, polymethyl methacrylate (PMMA) resins, melamine resins and polyimide resins. For facilitated deposition, the binder may be used in an amount of 0.1 to 10 parts per part of each of the charge-generating and transporting layers. For coating, use may be made of dipping, vapor deposition, sputtering or other suitable means.

### (c) Inorganic/Organic Laminated Type of Photosensitive Layer

The member may be formed (1) using the above inorganic photoconductive layer such as a-Si, a-Se, CdS and ZnO layers for the charge generating layer and the above organic charge transporting layer for the charge transporting layer or (2) using the above organic charge generating layer for the charge generating layer and the above inorganic photoconductive layer for the charge transporting layer.

Referring to the film thickness, the charge-generating and transporting layers may be 0.1 to 10 µm and 10 to 50 µm, respectively, as is the case with the above function-separated type of organic photosensitive member.

The charge blocking layer will now be explained in more detail.

The charge blocking layer may be provided to prevent a dark current from occurring on at least one or both sides of the photoconductive layer 9 (the injection of charges from the electrode) at the time when voltage is applied, viz., a phenomenon where, as if exposed to light, charges migrate through the photoconductor even when not actually exposed to light.

The charge blocking layer is of two types, one making use of a so-called phenomenon where charge transfer occurs in the presence of a high electric field and the other the rectifying effect. With the layer making use of such a phenomenon a current does neither pass through the photoconductive layer nor reach the surface of the insulating layer. When light is incident upon that layer, however, a high electric field is applied to its region on which light is incident due to the presence of one (electron or hole) of charges generated in the photoconductive layer, so that a current can pass through the charge blocking layer through the resulting charge transfer effect. Such a charge blocking layer may be formed of an inorganic insulating film, an organic insulating polymeric film, an insulating mono layer and so on, which may be used alone or laminated. The inorganic insulating film may be obtained from As₂O₃, B₂O₃, Bi₂O₃, CdS, CaO, CeO₂, Cr₂O₃, CoO, GeO₂, HfO₂, Fe₂O₃, La₂O₃, MgO, MnO₂, Nd₂O₃, Nb₂O₅, PbO, Sb₂O₃, SiO₂, SeO₂, Ta₂O₅, TiO₂, WO₃, V₂O₅, Y₂O₅, Y₂O₃, ZrO₂, BaTiO₃, Al₂O₃, Bi₂TiO₅, CaO-SrO, CaO-Y₂O₃, Cr-SiO, LiTaO₃, PbTiO₃, PbZrO₃, ZrO₂-Co, ZrO₂-SiO₂, AlN, BN, NbN, Si₃N₄, TaN, TiN, VN, ZrN, SiC, TiC, WC, Al₄C₃ and so on by glow discharge, vapor deposition, sputtering or other suitable means. It is noted that the thickness of this film may be determined for each material, while taking into consideration the insulating properties for preventing the injection of charges and the charge transfer effect. For the charge injection-preventing layer making use of the rectifying effect, there is provided a charge transporting layer capable of transporting charges and having polarity opposite to that of the electrode substrate. Thus, such a charge injection-preventing layer is formed of an inorganic photoconductive layer, an organic photoconductive layer or a composite inorganic/organic type of photoconductive layer, and has a film thickness of about 0.1 to 10 µm. More specifically, when the electrode is negative, use may be made of an amorphous silicon photoconductive layer doped with B, Al, Ga, In and so on as well as an organic photoconductive layer obtained by dispersing throughout resins amorphous selenium or oxadiazole, pyrazoline, polyvinyl carbazole, stilbene, anthracene, naphthalene, tridiphenylmethane, triphenylethane, azine, amine, aromatic amine or the like. When the electrode is positive, use may be made of an amorphous silicon photoconductive layer doped with P, N, As, Sb, Bi or the like as well as a ZnO photoconductive layer or the like formed by glow discharge, vapor deposition, CVD, coating or other suitable means.

The photosensitive member used in the present invention is also characterized in that a discharge-reinforcing layer 2 in the form of a film is formed on the above photoconductive layer 9, as illustrated in Figure 5.

As the discharge-reinforcing materials, use may be made of metal compounds of high electron emisivity such as BaO, CaO, SrO, MgO, CeB₆, CsSb, Sb-Rb-Cs, Ag-O-Cs, W-Th, TiC, TiO, Y₂O₃, La₂O₃, Dy₂O₃ and ThO₂ or metal oxides.

The discharge-reinforcing layer 2 may be formed on the surface of the photoconductive layer 9 by conventional film-forming techniques such as vapor deposition, sputtering, plasma CVD or coating using a binder, and have a film thickness of preferably 50 to 5000 Å, more preferably 100 to 1000 Å.

The electrode 7 is provided on a support 5, except that the support is formed of a metal, and may be formed of any material having a specific resistance value of 10⁶Ω·cm or below. Usable to this end are, e.g., an inorganic metal film, an inorganic metal oxide film or an organic film such as a quarternary ammonium salt film, all being electrically conductive. Such an electrode 7 may be formed on the support 5 by vapor deposition, sputtering, CVD, coating, plating, dipping, electrolytic polymerization or other suitable means. The thickness of the electrode 7 has to be varied depending upon the electrical properties of the material forming it and the voltage to be applied for recording information, but may be on the order of 100 to 3000 Å where it is formed of aluminium, for instance. As is the case with the photoconductive layer support 5, the electrode 7 is required to have such optical properties as mentioned above, when it is necessary for information-bearing light to be incident thereon. For instance, if the information-bearing light is visible light (400 to 700 nm), use may then be made of transparent electrodes obtained by the vapor deposition or sputtering of, e.g., ITO (In₂O₃-SnO₂) or SnO₂ or the coating of finely divided powders thereof formed with a binder into an ink, semi-transparent electrodes obtained by the vapor deposition or sputtering of, e.g., Au, Al, Ag, Ni or Cr, or organic transparent electrodes obtained by the coating of, e.g., tetracyanoquinodimethane(TCNQ) or polyacetylene.

The above electrode material may also be used in the case where the information-bearing light is infrared light (700 nm or more). In some cases, a colored electrode capable of absrobing visible light may be used so as to cut off visible light.

Bascially, the above electrode material may be also used in the case where the information-bearing light is ultraviolet light (400 nm or below). However, an electrode substrate material absorbing ultraviolet light (such as an organic polymeric material and soda glass) is unpreferred. Thus, preferable is a material such as quartz glass, which can transmit ultraviolet light therethrough.

No particular limitation is imposed on the material and thickness of the support 5 of the photosensitive member, as long as it has strength sufficient to support the photosensitive member. For instance, use may be made of flexible plastic films, metal foils, paper, glass, plastic sheets or rigid materials such as metal sheets (which may also serve as electrodes). However, when the support is used for a system for recording information with light incident from the photosensitive member, it is essentially required to transmit that light. For the support employed with a camera using natural light incident from the photosensitive member, use may be made of a transparent sheet or plastic film or sheet, all having a thickness of about 1 mm.

Where the support is required to be transparent to light incident from the photosensitive member for information recording, a anti-reflection layer may be provided thereon and/or the thickness of the electrode layer or the photoconductive layer may be adjusted, thereby achieving the desired anti-reflection effect.

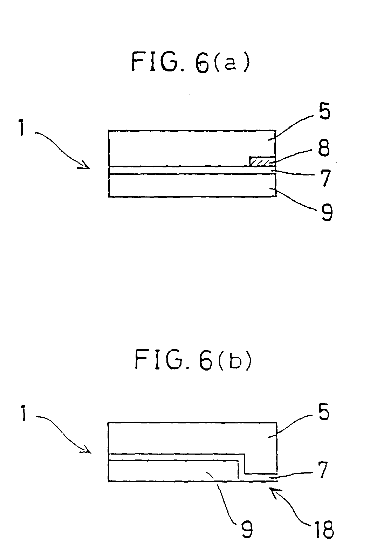

As illustrated in Figure 6(a), a light-shielding portion 8 may be provided in a part of the photosensitive member and in its light path. If the light-shielding portion 8 is formed of a material (such as aluminium) which may be used as an electrode, it then may be disposed either in or on any position of the electrode 7 or in or on any position of the support 5. If the light-shielding portion 8 is formed of a material which may not be used as an electrode, on the other hand, it may then be disposed in or on any position of the support 5. By the provision of such a light-shielding portion, it is possible to obtain the reference for darkness. Any material may be used for the light-shielding portion, provided that it has light-shielding properties.

As illustrated in Figure 6(b), on the other hand, the photoconductive layer 9 may be partly cut out at 18 to expose the electrode to view. This may be used for various corrections when the information to be electrostatically recorded is read as the reference of brightness, since the exposed electrode assumes the maximum value of brightness during exposure. In this case, there should be a difference of 0 to up to 1 µm between the (exposed) surface of the photoconductive layer 9 and the exposed region of the electrode.

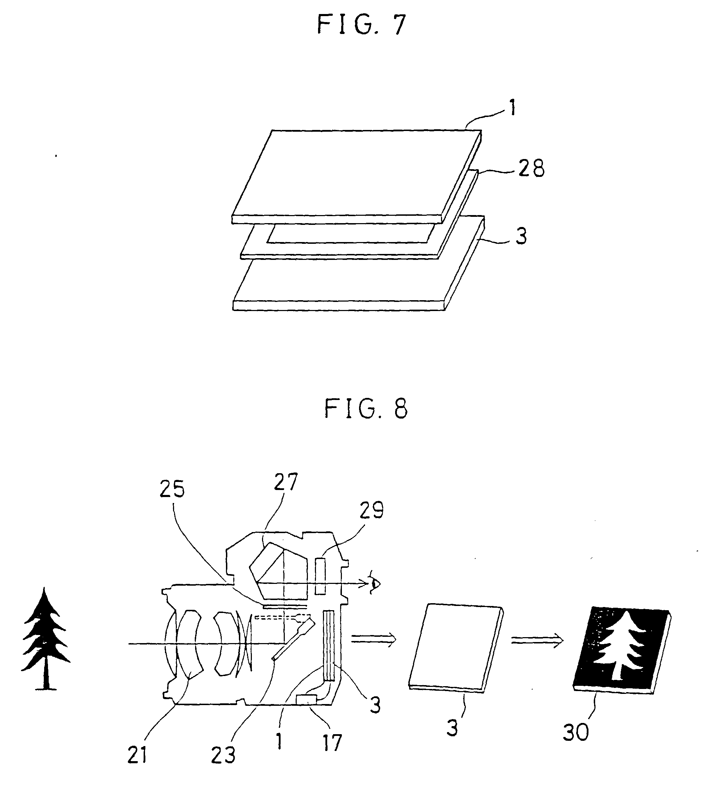

In the electrostatic information recording system according to the present invention, a photosensitive member 1 is laminated on a electrostatic information recording medium 3 in opposite relation through or not through a spacer 28, as illustrated in Figure 7. With a voltage impression type of switch (not shown), charges are accumulated on the insulating layer depending upon the quantity of incident light to form an incident optical image on the charge-retaining layer.

Where the spacer is used, the space between the photosensitive member and the electrostatic information recording medium is suitably in a range of 1 to 50 µm. The spacer may be formed of an organic material such as plastics or an inorganic material such as glass and laminated in place with an insulating solvent such as silicone oil.

Referring to possible exposure manners, planar exposure may basically be applied. However, scanning exposure recording may also be possible with, e.g., laser. For laser recording systems, argon laser (514, 488 nm), helium-neon laser (633 nm) or semiconductor laser (780 nm, 810 nm, etc.) may be used as the light sources. Voltage is then applied with the photosensitive member being brought in close planar contact with or in opposition to the electrostatic information recording medium at a constant interval. In this case, the electrode may be of the same polarity as that of the carrier of the photosensitive member. In that state, laser exposure corresponding to picture image, character, cord or line signals is carried out by scanning. Analog recording for information, e.g. picture images, is effected by modulation of the light intensity of laser, while digital recording for characters, cords or line pictures is effected by the on-off control of laser beams. Dotted imaging may also be carried out under the dot generator on-off control of laser beams. It is noted that the spectral properties of the photoconductive layer in the photosensitive member need not be panchromatic, and may be sensitive to the wavelength of the laser beam source.

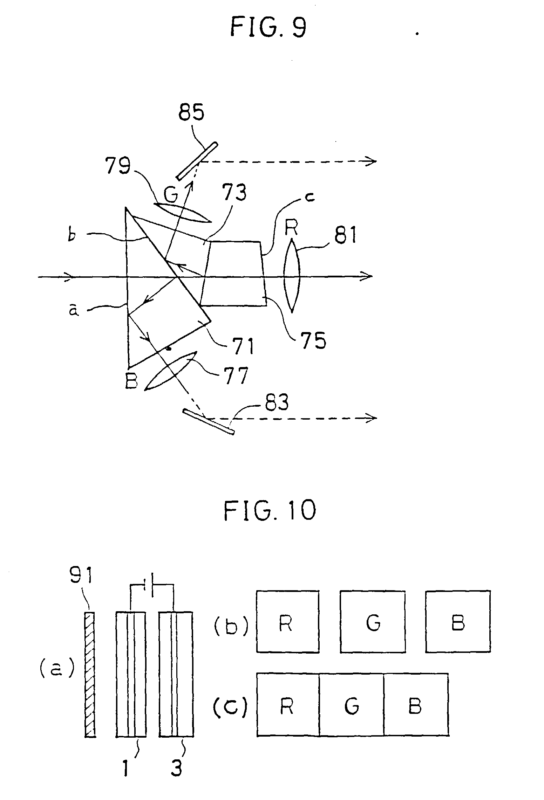

A schematic view of an electrostatic camera to which the electrostatic information recording system of the present invention is applied is illustrated in Figure 8, in which reference numerals common to Fig. 7, stand for like parts. It is noted that reference numeral 21 denotes a photographing lens, 23 a mirror, 25 a forcusing screen, 27 a pentagonal prism, 29 an eye lens and 30 a negative image.

In this electrostatic camera, the photosensitive member 1 and electrostatic information recording medium 3, shown in Fig. 1, are used in place of films for single-lens reflex cameras. Upon a power source 17 put on or off with a switch not shown, the mirror 23 is jumped up to a position shown by a dotted line to form an electrostatic latent image of a subject on the electrostatic information recording medium 3. If required, the toner development of the electrostatic information recording medium gives the negative image 30 . The electrostatic potential may also be read to produce electrical signals for display on CRT₃ or recording on other recording medium such as magnetic tapes.

A color filter used for color imaging will now be explained.

A prismatically optical system for color separation is illustrated in Figure 9, wherein reference numerals 71, 73 and 75 stand for prisms, 77, 79 and 81 filters and 83 and 85 reflectors.

The prismatically optical system for color separation comprises three prismatic blocks. Optical information incident from a plane a of the prismatic block 71 is partly separated and reflected from a plane b and then reflected from the plane a to obtain an optical component of B color through the filter 77. The rest of the optical information is incident on the prismatic block 73 and reaches a plane c from which it is partly separated and reflected. Another portion reaches directly the filters 79 and 81 from which optical components of G and R colors are obtained. The optical components of G and B colors may then be reflected from the reflectors 83 and 85 to obtain the R, G and B light components in the form of parallel light beams.

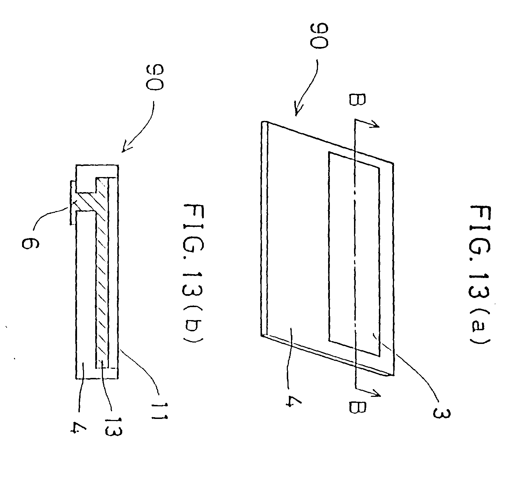

By disposing such a filter 91 in front of the photosensitive member 1 for photographing as illustrated in Figure 10, one frame may be formed either by three sets of electrostatic information recording media separated into the R, G and B colors, as shown in Figure 10 (b), or by a set of R, G and B images formed on one plane, as illustrated in Figure 13(c).

Reference will now be made to the electrostatic information recording process according to the present invention.

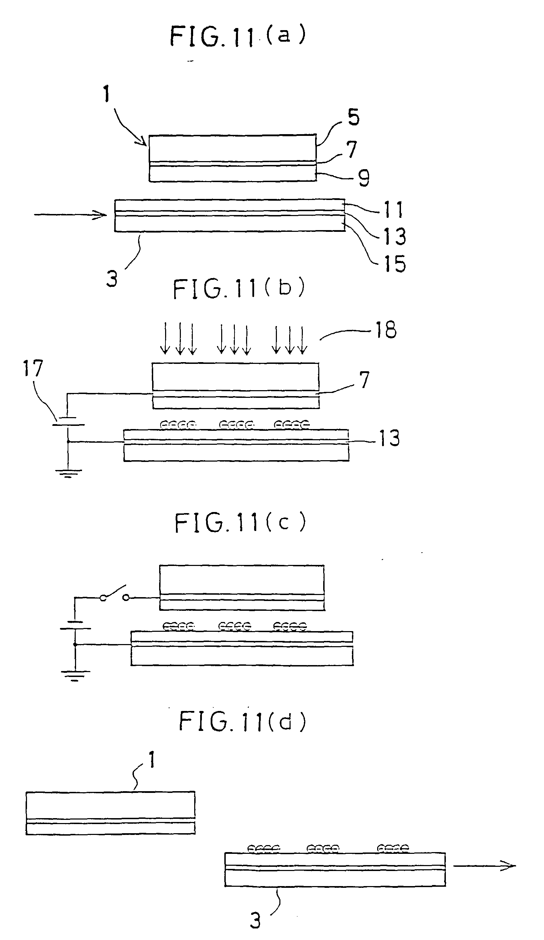

This process is illustrated in Figure 11 in which reference numeral 1 denotes a photosensitive member, 3 an electrostatic information recording medium, 5 a support, 7 an electrode, 9 a photoconductive layer, 11 a charge retaining layer (an insulating layer), 13 an electrode, 15 a support and 17 a power source.

In the embodiment of Fig. 11, exposure is carried out from the photosensitive member 1. The photoconductive layer support 5 formed of 1-mm thick glass is first provided thereon with the transparent electrode 7 formed of 1000-Å thick ITO, on which the photoconductive layer 9 of about 10 µm in thickness is formed to obtain the photosensitive member 1. With respect to this photosensitive member 1, the electrostatic information recording medium 3 is arranged through a gap of about 10 µm. The electrostatic information recording medium 3 is obtained by the vapor deposition of an aluminium electrode of 1000 Å in thickness on the insulating layer support 15 formed of 1-mm thick glass, followed by the formation of a 10-µm thick charge retaining layer (an insulating layer) on that electrode.

As illustrated in Figure 11(a), the recording medium 3 is first arranged with respect to the photosensitive member 1 through a gap of about 10 µm. Then, voltage is applied from the power source 17 between the electrodes 7 and 13, as illustrated in Figure 11(c). Since the photoconductive layer 9 is a high resistor in a dark place, no change takes place between the electrodes, if the voltage applied to the gap is lower than the firing voltage according to the Paschen's law. As a voltage higher than the firing voltage is applied to the gap from an external power source, discharge occurs to build up charges on the surface of the electrostatic information recording medium and that state continues until the firing voltage is reached, thus resulting in a background potential. When light 18 is incident from the photosensitive member 1, a portion of the photoconductive layer 9, on which the light strikes, is made so electrically conductive that discharge takes place through the air layer to accumulate charges on the electrostatic information recording medium. If microparticles of photoconductivity and electrical conductivity are incorporated in the charge retaining layer, information-bearing charges migrate into such microparticles by an electric field defined by the built-up charges and, optionally, by exposure, and are then stabilized in the insulating layer. Even when there are previously uniform background charges further accumulation of charges takes place on the portion of the photoconductive layer 9 on which the light strikes. After the completion of the exposure, the voltage is shut off as illustrated in Figure 11(c), and the electrostatic information recording medium 3 is then removed out, whereby the formation of an electrostatic latent image is completed.

The photosensitive member 1 may be brought in contact (as mentioned above) or no contact with the electrostatic information recording medium 3. In the contact type system, positive or negative charges are injected from the electrode 7 of the photosensitive member into the portion of the photoconductive layer 9 exposed to light. While attracted by the electrode 13, the injected charges pass through the photoconductive layer 9 and reach the surface of the insulating layer 11 where they stop and are accumulated. Then, with the photosensitive member 1 separated from the electrostatic information recording medium 3, the insulating layer 11 is separated while the charges remain accumulated thereon.

The voltage applied and exposure time are arbitarily determined where the quantity of incident light is in proportion to the amount of charge transfer and before the amount of charge transfer is saturated. In the present invention, however, it is preferred that a voltage of 100 V to 2000 V is applied as a voltage shutter for 10⁻⁶ to 10 seconds so as to achieve electrostatic recording of high sensitivity. With the first and second electrostatic recording media, electrostatic information may be recorded in this manner.

Reference will now be made to the structure of card members in which the electrostatic information recording medium of the present invention is used.

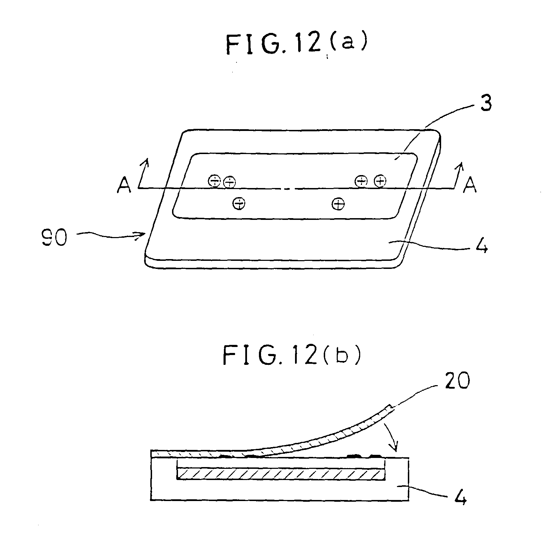

Figure 12(a) is a perspective view of a ROM type of electrostatic information recording card according to the present invention and Figure 12(b) a sectional view taken along the line A-A of Fig. 12(a) for showing a protective film provided in place. Figure 13 (a) is a perspective view of a DRAW type of electrostatic information recording medium and Figure 13 (b) a sectional view taken along the line B-B of Fig. 13(a).

A card substrate 4 on which an electrostatic information recording medium 3 is to be placed may be formed of any material of any thickness, if its strength is sufficient to support the recording medium 3. For instance, use may be made of flexible plastic sheets such as vinyl chloride sheets or rigid sheets such as glass sheets, ceramic sheets and metal sheets (which may also serve as electrodes). Without recourse to an electrostatic information recording medium support 15, an electrode 13 and a charge retaining layer may be laminated directly on the card substrate 4 in that order. As the support, use may be made of a metal sheet which may also serve as an electrode.

The electrostatic information recording medium 3 may be embedded in or sticked to the card substrate 4 as shown in Fig. 12 or Fig. 13, after or before the recording of information.

Information recording cards 90 are broken down into a ROM type in which information has already been recorded in the electrostatic information recording medium as shown in Figure 12 and a DRAW type in which information is not or partly recorded as shown in Figure 13. For the DRAW type, for instance, an adhesive plastic film, as already mentioned, may releasably be applied to the surface of an insulating layer as the protective film. For recording, the protective film may be peeled off to record information in an unrecorded region. After recording, the protective film may be again applied to the surface of the insulating layer.

The recording mode of the electrostatic information recording media according to the present invention may be used as forgery-safe means for cards, etc. due to its unvisibleness. With the present recording media, planar information processing may be possible because of their increased storage capacity and plane recording being acheivable once by planar exposure. Input or output of electrical signals and planar input of image data are also possible. In addition, various data such as analog, digital, image, sound and (0·1) data are recordable. The present media may further be used as computer's external memories. The information recorded are easily erasable.

The electrostatic information recording media of the present invention are not only usable as electrostatic recording cards but also applicable to magnetic cards and IC cards as well as ROM, DRAW and EDRAW types of optical cards and marking cards by changing information input means while using the present media as masters. Further, they are usable in varied recording regions.

Therefore, the present media may be used as the recording media for, e.g., ID cards, prepaid cards, credit cards, electronic calculators, electronic pocketbooks, cameras, clinical charts, timetables, maps, charge locks (keys), miniature books, name cards, sensors, dust removers, batteries, bar cords, Karaoke (playback and sound input combinations), communications means such as post cards, records, games, teaching aids and so on. The electrophotographic recording cards according to the present invention may be used as the recording media in banking systems, ID systems, prepaid systems, credit systems, ticket issuing systems, medical diagnosis systems, navigation systems, charge lock systems, communications systems, game systems, teaching systems and other systems.

The present invention will now be explained with reference to the following examples.

### Example 1 - Preparation of Electrostatic Information Recording Medium and its Charge Retainability

An aluminium electrode was vapor-deposited under vacuum (10⁻⁵ Torr) to a film thickness of 1000 Å on a film of a tetrafluoroethylene-hexafluoropropylene copolymer (FEP available from Du Pont) having a specific resistance of 10¹⁹Ω·cm or higher, a water absorption of 0.01 % and a thickness of 12.5 µm to obtain an electrostatic information recording medium.

The recording medium was charged thereon at +100V or -100V of surface potential by the control of corona charging and its charge retainability was measured.

After allowed to stand at normal temperature and humidity for 30 days, the surface potential was kept at 95 V, both + and -. Under accelerated testing conditions expressed in terms of 60°C, 20 % R.H. and 30 days, a surface potential of 95 V was maintained. Even after allowed to stand at 40°C under high-humidity conditions of 95 % R.H. for 30 days, 30 V were maintained in the form of surface charges.

### Example 2

An aluminium electrode was vapor-deposited under vacuum (10⁻⁵ Torr) to a film thickness of 1000 Å on a film of a tetrafluoroethylene-perfluoroalkylvinyl ether copolymer (PAF available from Du Pont) having a specific resistance of 1 × 10¹⁸Ω·cm or higher, a water absorption of 0.03 % and a thickness of 12 µm to obtain an electrostatic information recording medium.

The obtained recording medium was charged thereon at +100V or -100V of surface potential by the control of corona charging and its charge retainability was measured.

After allowed to stand at normal temperature and humidity for 30 days, the surface potential was kept at 93 V, both + and -. Under accelerated testing conditions expressed in terms of 60°C, 20 % R.H. and 30 days, a surface potential of 90 V was maintained. Even after allowed to stand at 40°C under high-humidity conditions of 95 % R.H. for 30 days, 30 V were maintained in the form of surface charges.

### Example 3

An aluminium electrode was vapor-deposited under vacuum (10⁻⁵ Torr) to a film thickness of 1000 Å on a film of a tetrafluoroethylene-hexafluoropropylene copolymer (FEP available from Du Pont) having a specific resistance of 10¹⁸Ω·cm or higher, a water absorption of 0.01 % and a thickness of 25 pm to obtain an electrostatic information recording medium.

The recording medium was charged thereon at +100V or -100V of surface potential by the control of corona charging and its charge retainability was measured.

After allowed to stand at normal temperature and humidity for 30 days, the surface potential was kept at 95 V, both + and -. Under accelerated testing conditions expressed in terms of 60°C, 20 % R.H. and 30 days, a surface potential of 95 V was maintained. Even after allowed to stand at 40°C under high-humidity conditions of 95 % R.H. for 30 days, 90 V were maintained in the form of surface charges.

A surface potential of 95 V was maintained after allowed to stand in an oven of 100°C for 1 hours, and a surface potential of 80V after left in an oven of 150°C for 1 hours.

### Example 4

An aluminium electrode was vapor-deposited under vacuum (10⁻⁵ Torr) to a film thickness of 1000 Å on a film of a tetrafluoroethylene-perfluoroalkylvinyl ether copolymer (PTFE, available from Du Pont) having a specific resistance of 1 × 10¹⁸Ω·cm or higher, a water absorption of 0.03 % and a thickness of about 25 µm to obtain an electrostatic information recording medium. The obtained recording medium was charged thereon at +100V or -100V of surface potential by the control of corona charging and its charge retainability was measured.

After allowed to stand at normal temperature and humidity for 30 days, the surface potential was kept at 93 V, both + and -. Under accelerated testing conditions expressed in terms of 60°C, 20 % R.H. and 30 days, a surface potential of 90 V was maintained. Even after allowed to stand at 40°C under high-humidity conditions of 95 % R.H. for 30 days, 30 V were maintained in the form of surface charges.

Even after allowed to stand in an oven of 100°C or 150°C, a surface potential of 100 V was maintained.

### Example 5

An aluminium electrode was formed to a thickness of 1000 Å on a glass substrate of 1 mm in thickness by vacuum vapor deposition (10⁻⁵ Torr). The electrode was then overcoated with a 5 % solution of a fluorine-containing resin Sytop (the trade name, a resin available from Asahi Glass and having a water absorption of 0.01 % and a specific resistance of 1×10¹⁸Ω·cm) in a fluorine base solvent by means of a blade coater, thereby obtaining an electrostatic information recording medium having a film thickness of about 10 µm, as measured after drying.

The thus obtained recording medium was charged thereon at +100V or -100V of surface potential by the control of corona charging and its charge retainability was measured.

After allowed to stand at normal temperature and humidity for 30 days, the surface potential was found to be 90 V, both + and -. Under accelerated testing conditions expressed in terms of 60°C, 20 % R.H.and 30 days, a surface potential of 75 V was maintained. Even after allowed to stand at 40°C under high-humidity conditions of 95 % R.H.for 30 days, a surface potential of 80 V were maintained.

### Example 6

An aluminium electrode was formed to a thickness of 1000 Å on a glass substrate of 1 mm in thickness by vacuum vapor deposition (10⁻⁵ Torr). With the use of a blade coater, the electrode was then overcoated with a solution of a polyester resin having a glass transition temperature of 67°C and a specific resistance of 7 × 10¹⁷Ω·cm (available under the trade name of Vylon 200 from Toyobo) dissolved in a mixed solvent of 37.5 parts by weight of methyl ethyl ketone and 37.5 parts by weight of toluene, followed by drying, thereby obtaining an electrostatic information recording medium having a polyeseter film thickness of about 10 µm.

The thus obtained recording medium was charged thereon at +100V or -100V of surface potential by the control of corona charging and its charge retainability was measured.

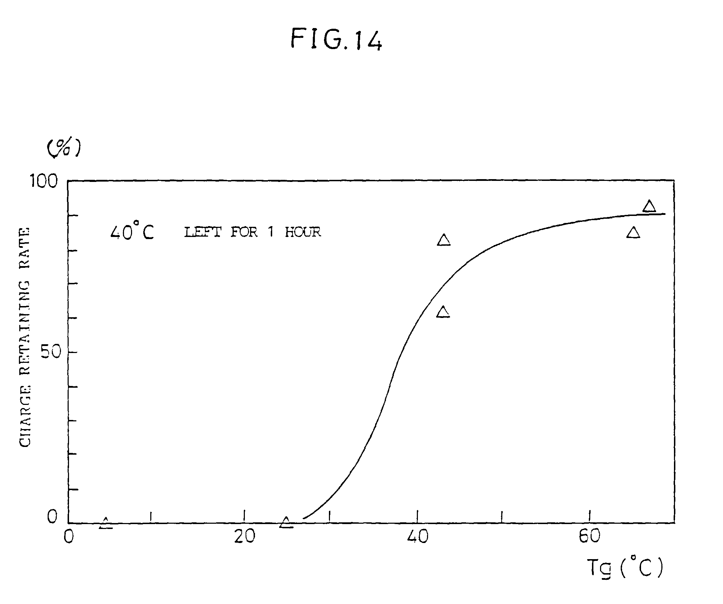

After allowed to stand at normal temperature and humidity for 30 days, the surface potential was found to be 80 V, both + and -. When the recording medium was exposed to an environment of 80°C and 20 % R.H.in an accelerated test, the surface potential dropped to 0 V, both + and -, within one day. In a similar manner as mentioned above, some of electrostatic information recording media were formed as charge retaining layers by using polyester resins having varied glass transition temperatures (available under the trade names of Vylon 500, GK150 and GK103 from Toyobo with glass transition temperatures of 4°C, 26°C and 47°C, respectively). After allowed to stand at 40°C for one hour, the rleation between the glass transition temperatures and the surface potentials was found. The results are plotted in Figure 14 wherein Δ shows the charge retaining ratio for each glass transition temperature.

### Example 7

An aluminium electrode was formed to a thickness of 1000 Å on a glass substrate of 1 mm in thickness by vacuum vapor deposition (10⁻⁵ Torr). The Al electrode was then vapor-deposited at 10⁻⁵ Torr with poly-p-xylylene (available under the trade name of Parylene from Tomoe Kogyo/Union Carbide and having a glass transition temperature of 80 to 100°C, a specific resistance of 9 × 10¹⁶Ω·cm and a water absorption of 0.01 %), thereby obtaining an electrostatic information recording medium having a film thickness of about 10 µm.

The thus obtained recording medium was charged thereon at +100V or -100V of surface potential by the control of corona charging and its charge retainability was measured.

After allowed to stand at normal temperature and humidity for 30 days, the surface potential was found to be 80 V. Under accelerated testing conditions expressed in terms of 60°C, 20 % R.H.and 30 days, a surface potential of 60 V was obtained. Even after allowed to stand at 40°C under high-humidity conditions of 95 % R.H.for 30 days, the surface potential were maintained at 60 V. This indicates that the obtained electrostatic information recording medium is a superior recording medium.

### Example 8

After an aluminium electrode was formed to a film thickness of 1000 Å on a polyester resin (PET) film (having a thickness of 12 µm, available under the trade name of Lumirror S available from Toray, and having a glass transition temperature of 69°C, a water absorption of 0.4 % and a specific resistance of 1 × 10¹⁸Ω·cm) by vacuum vapor deposition (10⁻⁵ Torr), A film was laminated on a glass substrate of 1 mm in thickness faced to the electrode with a double side adhesive tape to make an electrostatic information recording medium.

The thus obtained recording medium was charged thereon at +100V or -100V of surface potential by the control of corona charging and its charge retainability was measured.

After allowed to stand at normal temperature and humidity for 30 days, the surface potential was 50 V, both + and -.

### Example 9

An aluminium electrode was formed to a film thickness of 1000 Å on a polyethylene naphthalate (PEN) film (having a thickness of 12 µm, available under the trade name of Q Film from Teijin, and having a glass transition temperature of 113°C and a water absorption of 0.4 %) by vacuum vapor deposition (10⁻⁵ Torr) to make an electrostatic information recording medium.

The thus obtained recording medium was charged thereon at +100V or -100V of surface potential by the control of corona charging and its charge retainability was measured.

After allowed to stand at normal temperature and humidity for 30 days, the surface potential was found to be 80 V, both + and -, by measurement. Under accelerated testing conditions expressed in terms of 60°C and 20 % R.H. for 30 days, the surface potential was found to be 80 V by measurement.

### Comparison Example

An aluminium electrode was formed to a thickness of 1000 Å on a glass substrate of 1 mm in thickness by vacuum vapor deposition (10⁻⁵ Torr). With the use of a blade coater, the Al electrode was then overcoated with a solution of styrene-butadiene rubber (available under the trade name of Kaliflex TR4113 from Shell) having a glass transition temperature of - 70°C, a water absorption of 0.3 % and a specific resistance of 1 × 10¹⁵Ω·cm dissolved in a mixed solvent of 37.5 parts by weight of methyl ethyl ketone and 37.5 parts by weight of toluene, followed by drying, whereby an electrostatic information recording medium having a film thickness of about 10 µm was obtained.

The thus obtained recording medium was charged thereon at +100V or -100V of surface potential by the control of corona charging and its charge retainability was measured.

After allowed to stand at normal temperature and humidity for 30 days, the surface potential was found to be 0 V by measurement. Upon exposed to an environment of 60°C and 20 % R.H., the surface potential was also found to be 0 V after the lapse of one day.

### Example 10

Under sufficient agitation, 1 % by weight (0.2 g) of a curing agent (a metal catalyst available under the trade name of CR-15) was added to a mixed solution composed of 10 g of a methylphenyl silicone resin in an 1:1 solvent of xylene and butanol. With the use of a doctor blade 4 mill, the resulting solution was coated on a glass substrate vapor-deposited with Al at a thickness of 1000 Å. Subsequent 1-hour drying at 150°C gave an electrostatic information recording medium (a) having a film thickness of 10 µm.

In a similar manner as mentioned above, the above mixed solution was coated on a 100-µm polyester film vapor-deposited with Al at a thickness of 1000 Å, followed by drying, to obtain a film-like electrostatic information recording medium (b).

The above mixed solution was also coated on a 4-inch (10.16cm) disk-like acryl substrate (having a thickness of 1 mm) vapor-deposited with Al at a thickness of 1000 Å by means of a spinner at 2000 rpm. Subsequent 3-hour drying at 50°C gave a disc-like electrostatic information recording medium (c) having a film thickness of 7 µm.

Similar coating with the above mixed solution containing additionally 0.1 g of zinc stearate and drying gave an electrostatic information recording medium (d) having a film thickness of 10 µm.

### Example 11

A mixed solution composed of 10 g of a polyimide resin and 10 g of N-methylpyrrolidone was spinner-coated (at 1000 rpm for 20 seconds) on a glass substrate vapor-deposited with Al at a thickness of 1000 Å. After pre-drying was carried out at 150°C for 30 minutes to evaporate off the solvent, 2-hour heating was applied at 350°C for curing. Thus, an electrostatic information recording medium having a film thickness of 8 µm was obtained.

### Preparation of Photosensitive Member

### Example 12

### Single-Layer Photosensitive Member

A mixed solution composed of 10g of poly-N-vinylcarbazole (available from Anan Koryo), 10 g of 2,4,7-trinitrofluorenone, 2 g of a polyester resin (a binder available under the trade name of Vylon 200 from Toyobo) and 90 g of tetrahydrofuran (THF) was prepared in a dark place and it was then spread on a glass substrate (of 1 mm in thickness) sputtered with In₂O₃-SnO₂ at a thickness of about 1000 Å with the use of a doctor blade. The product was dried at 60°C for about 1 hour while supplying air thereto to obtain a photosensitive layer having a photoconductive layer of about 10 µm in thickness. For complete drying purposes, air drying was carried for further one day.

### Example 13

### Production of an amorphous silicon aSi:H inorganic photosensitive member

(1) Cleaning of substrate
   A 23 mm long, 16 mm wide and 0.9 mm thick, optically polished glass substrate, sold by Corning under product designation 7059 glass, and having a thin transparent SnO₂ electrode layer formed on its one face, was subjected to ultrasonic cleaning in each of trichloroethane, acetone and ethanol in the described order. The glass was cleaned in each cleaning liquid for 10 minutes.
(2) Preparation of equipment
   A reaction receptacle and gas pipes were placed within a reaction chamber 404, which was evacuated by a diffusion pump to 10⁻⁵ Torr for carrying out heating at 150-350 °C for one hour, and after heating the chamber was cooled.
(3) Deposition of aSi:H(n⁺)
   The substrate cleaned was set on the anode 406 in the reaction chamber 404 in FIG. 64 with good thermal conduction, and the reaction chamber was evacuated to 10⁻⁵ Torr by the diffusion pump, in which condition the heater 408 was adjusted so that the glass substrate was increased to 250°C. At this temperature condition, a gas of B₂H₆ /SiH₄, (1000 ppm) was allowed to flow into the reaction chamber 404 by controlling the needle valve and the rotation of the PMB so that pressure in the chamber was 200 mTorr. After the inner pressure of the reaction chamber became constant, 40 W of Rf power 402 (13.56 MHz) was put to work through the Matching box 403 to form plasma between the cathode and the anode. The deposition was performed for 4 minutes, then Rf power was disconnected, and the needle valve was closed. This resulted in about 0.2 µm thick aSi:H(n⁺) which constituted a blocking layer was deposited on the substrate.
(4) Deposition of aSi:H
   A silane gas of 100 % (SiH₄) was entered into the reaction chamber in the same manner as in (3) Deposition of aSi:H. When the inner pressure in the chamber became constant, 40W Rf power 402 (13.56 MHz) was similarly connected through the matching box 403 to form a plasma which was maintained for 70 minutes. After the deposition was completed, the Rf power was disconnected and the needle valve was closed. After the substrate was cooled by turning off the heater 408, it was taken out. As a result, about 18.8 µm thick film was deposited on the aSi:H(n+) film. Thus, a photosensitive member including SnO₂ /aSi:H(n⁺) blocking layer/aSi:H(non doped) 20 µm was produced.

### Example 14

### Fabrication of amorphous selenium-tellurium inorganic photosensitive member

A mixture of metallic particles obtained by mixing selenium (Se) with tellurium (Te) in a proportion of 13 % by weight was used. A Se-Te thin film was formed on an ITO glass substrate by vapor depositing the metallic mixture at a vacuum degree of 10⁻⁵ Torr under resistance heating. The film leas a thickness 1 µm. Subsequently at the same vacuum level, Se vapor deposition was similarly carried out under resistance heating to form a 10 µm a-Se layer on the a-Se-Te layer.

### Example 15

### Production of function separated photosensitive member (forming of charge generation layer)

A liquid mixture consisting of 0.4 of chlorodianeblue and 40 g of dichloroethane was placed in a stainless receptacle having a volume 250 ml, and then 180 ml of glass beads No3 was added. These material was pulverized by a vibrating mill (sold by Yasukawa Denki Seisakusho under product designation EU9-4) for about 4 hours to produce chlorodianeblue with particle size 5 µm or smaller, to which after the glass beads being filtered, 0.4 g of polycarbonate, sold by Mitsubishi Gas Kagaku under tradename Upiron E-2000 was stirred for about 4 hours to form a solution, which was coated by using a doctor blade on the 1 mm thick glass substrate, having about 1000 Å thick In₂O₃-SnO₂ film sputtered on it, to form an about 1 µm thick charge generation layer which was dried at room termperature for one day.

### Formation of a charge transport layer

A liquid mixture, containing 0.1 of of 4-dibenzylamino-2-methylbenzaldehyde-1,1'-diphenylhydrazone, 0.1 g of polycarbonate (Upiron E-2000), and 2.0 g of dichloroethane, was coated by a doctor blade over the charge generation layer, above mentioned, to form an about 10 µm thick charge transport layer, which was dried at 60°C for 2 hours.

### Example 16

### Formation of a charge generation layer

10 g of butyl acetate, 0.25 g of butylal resin,(sold by Sekisui Kagaku, Japan under trade name SLEC), 0.5 g of a ClO₄ salt of azulenium having the following equation: 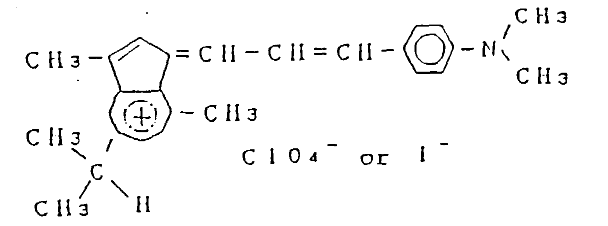 and 33 g of glass beads No. 1 were mixed and stirred by a touch mixer for one day to prepare sufficiently dispersed material, which was coated by using a doctor blade or applicator on ITO deposited on a glass plate and then dried at 60°C for more than 2 hours to form a dried film having a thickness 1 µm or less.

### Formation of a charge transport layer

9.5 g of tetrahydrofuran, 0.5 g of polycarbonate, sold by Mitsubishi Gas Kagaku, Japan, under trade name of Upiron E 2000), 0.5 g of a hydrazone derivative (sold by Anan Koryou, Japan, under product designation CTC191) having the following equation: 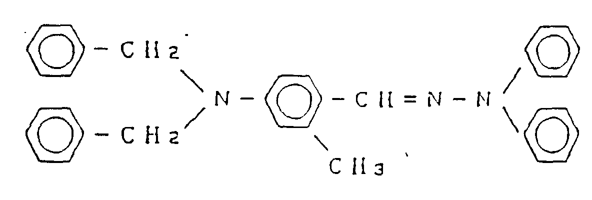 were mixed and then coated by using a doctor blade over the charge generation layer above described to form a coating, which was dried at 60°C for 2 hours with a film thickness 10 µm or less.

### Example 17

### Formation of an electron generation layer

20 g of tetrahydrofuran, 0.5 g of a butylal resin, sold by Sekisui Kagaku, Japan, under tradename of SLEC, 0.25 g of titanylphthalocyanine, 0.25 g of 4.10-dibromoanthanthrone, and 33 g of glass beads No. 1 were stirred by a touch mixer for one day to obtain a sufficiently dispersed material, which was coated by using a doctor blade or applicator over ITO laminated over a glass plate and then dried at 60°C for 2 or more hours to produce a dried coating with a thickness 1 µm or less.

### Fabrication of a charge transport layer

0.5 g of polycarbonate (produced by Mitsubishi Gas Kagaku, Japan, under the trade name of Upiron E2000), and 0.5 g of the above-described hydrazone derivative (sold by Anan Koryou, Japan, under product designation CTC191) were dissolved into 9.5 g of dichloroethane to prepare a coating material,which was coated by using a doctor blade over the charge generation layer, above described, and then dried for 2 hours at 60°C for 2 hours or more to form a film having a thickness 10 µm or larger.

### Example 18

### Forming of a barrier layer of charge injection layer

A soluble polyamide (sold by Toa Gosei Kagaku, Japan, under product designation FS-175SV10) was coated by a spin coater with a thickness 0.5-1 µm on ITO laminated on a glass plate and then dried at 60°C for 2 hours or more.

### Forming of a charge generation layer

10 g of butyl acetate, 0.25 g of a butylal resin (sold by Sekisui Kagaku, Japan, under the tradename SLEC), 0.5 g of the above-described ClO₄ salt of azulenium and 33 g of glass beads No.1 were mixed and stirred by a touch mixer for one day to produce a sufficiently dispersed material, which was coated by using a doctor blade or an applicator over the barrier layer of charge injection above mentione and then dried at 60° C for 2 hours or more to form a dried coating having a thickness 1 µm or less.

### Formation of a charge transport layer

0.5 g of polycabonate (sold by Mitsubishi Gas Kagaku, Japan under tradename Upiron E2000) and 0.5 g of the above-described hydrazone derivative (sold by Anan Koryou under product designation CTC191 were dissolved into 9.5 g of tetrahydrofuran to prepare a coating material, which was coated by using a doctor blade on the charge generation layer and then dried at 60°C for 2 hours or more to form a coating with a thickness 10 µm or less.

### Example 19

### Formation of a barrier layer of charge injection layer

A soluble polyamide (sold by Toa Gosei Kagaku under product designation FS-175SV10) was applied with a thickness 0.5-1 µm over ITO, laminated on a glass plate, and then dried at 60°C for 2 hours or more.

### Formation of a charge generation layer

20 g of tetrahydrofuran, 0.5 g of a butylal resin (sold by Sekisui Kagaku under the tradename SLEC), 0.25 g of titanylphalocyanine, 0.25 g of 4.10-dibromoansuansuron and 33 g of glass beads No.1 were stirred by a touch mixer for one day to form a sufficiently dispersed material, which was applied by a doctor blade or an applicator on the above-mentioned barrier layer of charge injection and was then dried at 60 °C for 2 hours or more to form a dried coating having a thickness 1 µm or less.

### Formation of a charge transport layer

0.5 g of polycarbonate (sold by Mitsubishi Gas Kagakuk under the tradename Upiron E2000) and 0.5 g of the above-mentioned hydrazone derivative (sold by Anan Koryo under product designation CTC191) were dissolved into 9.5 g of dichloroethane as a solvent to prepare a coating material, which was coated by using a doctor blade over the above-mentioned charge generating layer and then dried at 60°C for 2 hours to form a dried coating having a thickness 10 µm or larger.

### Example 20

### Formation of an electrode layer for a photosensitive member

An indium tin oxide (ITO) having specific resistance 100 Ω·cm² was coated by sputtered over a blue glass plate in condition of 100°C by the substrate temperature and 10⁻³ Torr under oxy-atomosphere. This material may be deposited by EB method.

### Formation of a barrier layer of charge injection

Silicon dioxide was sputtered over the above-described electrode layer. The thickness of the silicon dioxide may be 100-3000 Å and aluminum oxide may be used in place of silicon dioxide. EB method may be adopted instead of sputtering for depositing the layer.

### Formation of charge generation layer

A selenium-tellurium layer containing 13 % by weight of tellurium was deposited on the above barrier layer of charge injection by resistance heating with a thickness 2 µm or less.

### Formation of a charge transport layer

A selenium layer was deposited on the above-mentioned charge generation layer by resistance heating with a thickness 10 µm or less.

### Example 21

### Process for recording electrostatic information and reproducing it.

The photosensitive member (PVK-TNF) prepared in Example 12 was located in opposition to the polyester electrostatic information recording medium prepared in Example 6, using as the spacer a 10-µm thick polyester film. Subsequently, a DC voltage of - 600 V was applied between both electrodes with the photosensitive member negatively and the resinous layer positively.

While the voltage was impressed, the recording medium was exposed from the photosensitive member to light emanating from a light source halogen lamp at a luminous intensity of 1000 luxes for one second.

As a result of the measurement of surface potentials, the surface potential of the recording medium was found to be - 150 V by a surface electrometer. However, the unexposed region was found to have a surface potential of - 35 V.

### Example 22

The photosensitive member (PVK-TNF) of Ex. 12 and the electrostatic information recording medium of Ex. 10(a) are laid on top of another with the elctrode outside, and are then set in a camera. In order to provide a space between the photosensitive member and the recording medium, a 10-µm polyester film is disposed as the spacer around the surface to be exposed to light.

With the photosensitive member's electrode negatively and the recording medium positively, a voltage of -700V was impressed. In that state, the optical shutter was clicked at an exposure f=1.4 and a shutter speed of 1/60 sec., or a voltage was applied for 1/60 sec. at an exposure f=1.4 with the shutter held open, thereby photographing a subject outdoors in the daytime. After the exposure and the application of voltage were put off, or the application of voltage was put off, the electrophotographic recording medium was removed out in a bright or dark place, and (1) CRT imaging was carried out by microarea potential reading and (2) imaging was performed by toner development.

In (1), X-Y axis scanning was carried out with a 100 × 100 µm probe for measuring microarea surface potentials to process potential data of 100 µm units, and imaging was performed on a CRT by potential-brightness conversion. Formed on the electrostatic information recording medium is an analog potential latent image from a high potential - 200 V of the exposed region to a low - 50 V of the unexposed region, which could be developed on the CRT at a resolution of 100 µm.

In (2), the removed electrostatic information recording medium was immersed in a negatively charged wet toner (black) for 10 seconds, thereby obtaining a positive image. The resolution of the obtained toner image was as high as 1 µm.

Color images were photographed in the following manners.
(1) Prismatic Three Plane-Splitting
   As illustrated in Figure 9, the R, G and B filters were disposed on three planes of a prism. While the above media were set on the planes, a subject was photographed at f=1.4 and a shutter speed of 1/30 sec.
(2) Color CRT Displaying
   The R, G and B latent images were read by scanning in a similar manner to form on a CRT fluorescences corresponding to the R, G and B latent images, and images separated into three colors were compounded on the CRT to obtain a color image.
(3) Toner Development
   The electrostatic information recording medium subjected to color separation and exposure was developed with C (cyan), M (magenta) and Y (yellow) charged negatively with respect to the R, G and B latent images to form toner imanges. Before the toners were dried, paper was put on the medium on which the cyane toner image was formed, and was then positively charged by corona. Thereafter, the toner image was transferred to the paper upon released. While the images were in alignment, the magenta and yellow toners were successively transferred to the same position, whereby a color image is formed on the paper.

### Example 23

The photosensitive member (PVK-TNF) of Ex. 12 was superposed on the electrostatic information recording medium of Ex. 10(a) in opposite relation through a spacer of a 10 µm-thick polyester film. Then, a DC voltage of - 700 V is applied between both electrodes with the photosensitive member negatively and the insulating layer positively.

It is noted that in the case of the amorphous silicon photosensitive member, voltage is applied with the photosensitive member negatively, while in the case of the amorphous selenium, voltage is applied with the photosensitive member positively.

While the voltage was impressed, the recording medium was exposed from the photosensitive member to light emanating from a light source halogen lamp at a luminous intensity of 1000 luxes. After the exposure, the voltage was put off. As a result, a surface potential of - 220 V was measured on the exposed region of the recording medium by means of an surface electrometer, while a surface potential of - 35 V was obtained on the unexposed region thereof.

Afterwards, a polyester film was laminated by using dimethyl silicon as the close contact type adhesive agent to read potentials from above the film. As a result, a surface potential of - 220 V was again measured by a surface electrometer. After this polyester film was peeled off, additional potential reading indicated that charges were retained in the insulating layer.

The recording medium was also similarly exposed to light, while a resolution pattern film was brought in close contact with the photosensitive member. Thereafter, the recording medium was subjected to X-Y axis scanning with a 50 × 50 µm probe surface for measuring microarea potentials to process potential data of 50 µm units, which were then displayed on a CRT by potential-brightness conversion on an enlarged scale. In consequence, resolution patterns of up to 100 µm were confirmed on the CRT. After the exposure, the electrostatic information recording medium was allowed to stand at room temperature of 25°C and 35 % R.H. for three months. Subsequent similar potential reading by scanning indicated that the obtained resolution patterns were quite similar to those just after the exposure.

After the exposure of the resolution pattern, an insulating film was laminated in place and a resolution of up to 100 µm was obtained on the CRT by reading from above the laminated film.

A subject was photographed with an ordinary camera at an exposure f=1 and a shutter speed of 1/60 sec. outdoors in the daytime, while a voltage of - 700 V was impressed. After the exposure, the electrostatic information recording medium was subjected to X-Y axis scanning with a 50 × 50 µm-probe surface for measuring microarea potentials to process potential data of 50 µm units, which were then displayed on a CRT by potential-brightness conversion on an enlarged scale. As a result, it was found that imaging of good gradiation occurred. A similar film as stated above was laminated on the electrostatic information recording medium to measure imaging from above the laminated film. In consequence, it was found that imaging having gradiation quite similar to that in the absence of any laminated film occurred.

### Example 24

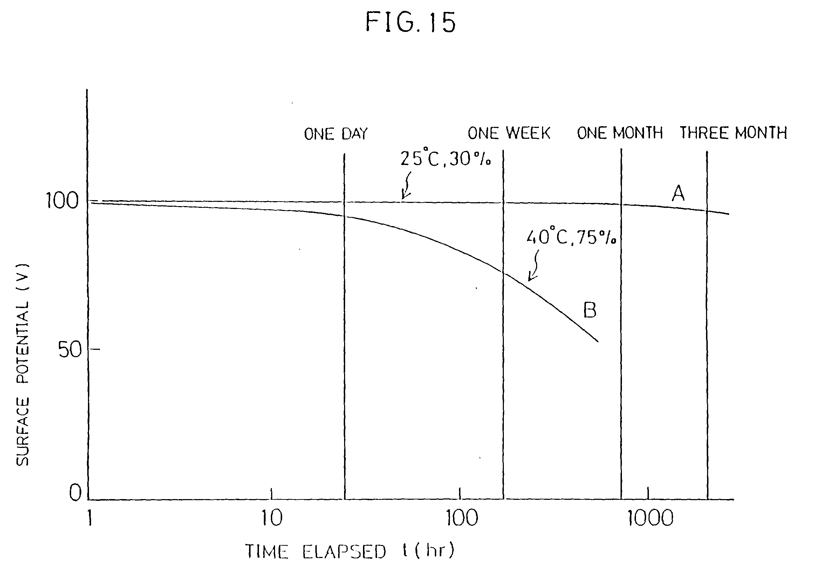

Figure 15 is a graphical view showing the charge retainability of the electrostatic information recording medium of Example 10(a), in which the results of the surface potentials, as measured, are plotted with the time elapsed.

A line A refers to the recording medium allowed to stand at a temperature of 25°C and a humidity of 30 %. Even after the lapse of three months, the surface charges on the recording medium were not attenuated. A line B refers to the recording medium allowed to stand at a temperature of 40°C and a humidity of 75 %. After the lapse of one week, the attenuation of the surface charges was barely about 25 %.

### Example 25 - Photosensitive Member Provided with Discharge-Reinforcing Layer

The transparent electrode to be used was obtained by providing a 1000 Å-thick In₂O₃-SnO₂(ITO) film on a glass substrate of 1 mm in thickness by sputtering. A 10-µm thick a-Se film was then formed on the ITO film by vacuum vapor-deposition (10⁻⁵ Torr, resistance heating) to construct a photoconductive material.

TiC was further formed to a thickness of 500 Å on the a-Se layer by sputtering (10⁻² Torr, argon plasma) to form a discharge-reinforcing layer. Thus, the final photosensitive member was formed using the above photoconductive material.

In order to obtain the electrostatic information recording medium, on the other hand, aluminium was formed to a thickness of 1000 Å on a glass substrate of 1 mm in thickness by vaccum vapor deposition (10⁻⁵ Torr, resistance heating), and a silicone resin layer (CR-15, 2 %, TSR-144, available from Toshiba Silicone) was provided by spinner coating (with a 10 % toluene-xylene solution and at 1000 rpm × 10 sec.), followed by 1-hour heating at 150°C, thereby forming an insulating layer having a film thickness of 6 µm.

Both the members were arranged through an air gap of 10 µm with the film sides opposite to each other.

Referring to voltage application and exposure, a voltage of 400 V was applied between both electrodes while using the photosensitive member's electrode as the positive electrode. In that state, a half area of the photosensitive member was exposed through a mask to light emanating from a halogen lamp at 10 luxes for 1 second. After the exposure, the voltage was cut off, followed by the removal of the electrostatic information recording medium. Afterwards, the potentials stored on the exposed and unexposed regions were found to be 150 V and 30 V, respectively, by measurement with a surface electrometer.

On the other hand, a photosensitive member comprising the a-Se layer alone, i.e., which was not provided with any discharge-reinforcing layer, was impressed with voltage and exposed to light under similar conditions. As a consequence, no storage of potentials was observed on both the exposed and unexposed regions.

When this photosensitive member was impressed with a voltage of 700 V and exposed to light in a similar manner as mentioned above, it was observed that the surface potentials were 170 V on the exposed region and 40 V on the unexposed region, these numerical values being substantially equal to the accumulated potentials obtained when the discharge-reinforcing layer was provided.

From the foregoing, it has been found that the voltage to be externally impressed can be effectively reduced by the provision of such a discharge-reinforcing layer.

### Example 26

The discharge-reinforcing layer of Ex. 25 was formed on the a-Se layer to a thickness of 300 Å by EB vapor deposition (10⁻⁵ Torr), provided however that CeB₆ was used in place of TiC. When the electrostatic information recording medium was subjected to similar voltage application and exposure, it was observed that surface potentials of 120 V and 40 V were obtained on the exposed and unexposed regions, respectively.

### Example 27

An SnO₂ film was formed on an 1-mm thick glass substrate to a thickness of 2000 Å by sputtering to prepare a transparent electrode. A 5 % (calculated as solid) solution of an 1:1 (molar ratio) mixture of polyvinyl carbazole (available from Anan Koryo) and 2,4,7-trinitrofreonone (available from Junsei Chemical) in chloroform was then spread on the above substrate with a doctor blade (with a gap width of 200 µm). Subsequent one-hour drying at 60t gave a photoconductive layer having a film thickness of 15 µm.

With an LaB₆ target, a 300-Å thick LaB₆ film was further sputtered on the above photoconductive layer to prepare a discharge-reinforcing layer.

An electrostatic information recording medium similar to that of Ex. 25 was used. For the impression of voltage and exposure, a voltage of 400 V was applied between both electrodes, while the photosensitive member's electrode was used as the negative electrode. As a result of the exposure of the recording medium to light under exposure conditions similar to those applied in Ex. 25, surface charges of - 180 V and - 55 V were obtained on the exposed and unexposed regions, respectively.

For the purpose of comparison, similar voltage impression and exposure were carried out with only the PVK-TNF layer, i.e., on which no LaB₆ film was formed. The result was that no charge was obtained at all on the electrostatic information recording medium. On the other hand, the externally applied voltage was increased to - 1000 V. The results were that charges of - 200 V and - 80 V were obtained on the exposed and unexposed regions, respectively.

### Example 28

TiO₂ was formed on the inorganic photosensitive member of amorphous silicon (a-Si:H) prepared in Ex. 13 to a thickness of 500 Å by sputtering to form a discharge-reinforcing layer. The electrostatic information recording medium prepared in Ex. 25 was impressed with a voltage of - 500 V, while the photosensitive member's electrode was used as the negative electrode, and was then exposed to light emanating from a halogen lamp at 10 luxes for 10⁻³ sec. The results were that surface potentials of - 180 V and - 110 V were measured on the exposed and unexposed regions, respectively.

On the other hand, similar experiment was carried out with a photosensitive member on which no discharge-reinforcing layer was formed. No surface voltage was observed at the same voltage. When the applied voltage was increased to, e.g., - 800 V, the same potentials of - 80 V appeared on both the exposed and unexposed regions, so that no image of the exposed region was formed. Hence, it was found that by the provision of a discharge-reinforcing layer, not only could the effective external voltage be decreased but the responsibility to light could also be increased.

### Example 29 - Process for recording electrostatic information and reproducing it

With a micropipet, ω-phenylic acid was added dropwise in water to form a monomolecular film of ω-phenylic acid on the surface of the water. On the other hand, aluminium was vapor-deposited on an 1-mm thick glass substrate to form an electrode layer having a thickness of 1000 Å. Ten monomolecular films, each as mentioned just above, were laminated on the electrode surface at a surface pressure of 30 dynes/cm² and a drawing-up rate of 1 cm/min. to obtain a film having a thickness of 200 Å. Subsequent air-drying gave the electrostatic information recording medium 3 according to the present invention.

This recording medium 3 is located in opposition to the photosensitive member 1 prepared in Ex. 12 through a void of about 10 µm defined by a 10-µm thick polyester film used as the spacer. Then, a DC voltage of - 500 V is applied between both electrodes with the photosensitive member negatively and the recording medium positively. In that state, the recording medium is exposed from the back side of the photosensitive member to light emanating from a light source halogen lamp at a luminous intensity of 1000 luxes for 1 second. After the completion of the exposure, the voltage is cut off. The formation of an electrostatic latent image is then completed by the removal of the recording medium 3. As a result, the charge retaining layer was found to have a surface potential of - 20 V by measurement with a surface electrometer. However, the surface potential of the exposed region was 0 V.

Similar exposure was carried out while a resolution pattern film was brought in close contact with the back side of the photosensitive member. Afterwards, the electrostatic information recording medium was subjected to X-Y axis scanning with a 50 × 50 µm probe surface for measuring microarea potentials to process potential data of 50 µm units, which were then displayed on a CRT by potential-brightness conversion on an enlarged scale. As a result, resolution patterns of up to 100 µm were confirmed on the CRT. After the exposure, the electrostatic information recording medium was allowed to stand at room temperature of 25°C and 35 R.H. for three months for similar potential reading by scanning. As a consequence, resolution pattern displays quite similar to those just after the exposure were obtained.

For alternative exposure, a subject was photographed with an ordinary camera at an impression voltage of - 500 V, an exposure f=1.4 and a shutter speed of 1/60 sec. outdoors in the daytime. After the exposure, the recording medium was subjected to X-Y axis scanning with a 50 × 50 µm probe surface for measuring microarea potentials to process potential data of 50 µm units, which were then displayed on a CRT by potential-brightness conversion on an enlarged scale. As a result, imaging having gradiation occurred.

### Example 30

Octadecyl maleate was used as the material for an LB film, and an electrostatic information recording medium having a film thickness of 300 Å was prepared with similar substrate and process to those described in Ex. 29. For the estimation of the charge retainability of this recording medium, a surface potential of 50 V was given to the medium's surface by corona charging ( which involves applying high voltage to a corona wire to give the discharged ions to an object along the electrified). Under such conditions expressed in terms of room temperature (25°C, 35 % R.H.), 40°C (dry) and 60°C (dry), the surface potential attenuation characteristics were estimated. The results were that no potential change was found whatsoever at room temperature even after five months, and the potentials existed in stable for two months at 40°C (dry) and up to as long as 15 days at 60°C (dry).

For the purpose of comparison, in place of the LB film, a 10 % by weight solution of a polyester resin (Vylon 200 available from Toyobo) in chloroform was coated to a thickness of 2 µm (on dry basis) with a doctor blade to form a charge retaining layer, of which similar estimation was then made. The results were that the surface potential attenuated to 40 V even after allowed to stand at room temperature for one day and dropped to 10 V at 40°C even after the lapse of one day. At 60°C, no potential could be measured even after the lapse of one day.

### Example 31

An electrostatic information recording medium comprising octadecyl maleate was used. After a 2-µm resolution pattern had been formed on the surface of the charge retaining layer in such a manner as described in Ex. 29, the recording medium was allowed to stand at 40°C (dry) for one day. Thereafter, toner development was carried out with a wet toner of (-) polarity. The resulting toner image reproduced faithfully the resolution pattern, and toner development having a resolution of 2 µm occurred.

For the purpose of comparison, similar estimation was made with a medium in which the charge retaining layer was formed of a polyester resin. The results were that the concentration of toner development dropped due to a surface potential attenuation and, at the same time, the resolution of the toner image itself was so reduced that the image faded.

### Example 32 - Electrostatic Information Recording Medium according to the invention.

An SiO₂ film was sputtered on a glass substrate vapor-deposited with 1000-Å aluminium to form a charge retainability-reinforcing layer 10 having a film thickness of 100 Å. Further coated on that film was a mixed solution composed of 1 g of a polyester resin (Vylon 200) and 10 g of chloroform by doctor blade coating to form an insulating layer having no charge injection. Subsequent 1-hour drying at 100°C gave an insulating layer 11 having a film thickness of 10 µm.

### Example 33

In the process for making an electrostatic information recording medium, as described in Ex. 32, the order of lamination of the charge retainability-reinforcing layer and the insulating layer having no charge injection was reversed. In other words, a mixed solution of 1 g of a polyester resin (Vylon 200) and 10 g of chloroform was first coated on a glass substrate vapor-deposited with 1000-Å thick aluminium by doctor blade coating, and was then dried at 100°C for 1 hour to form the insulating layer 11. Subsequently, an SiO₂ film having a film thickness of 100 Å was sputtered as the charge retainability-reinforcing layer 10 on the the insulating layer.

### Example 34

A mixed solution composed of 1 g of a polyester resin Vylon 200) and 10 g of chloroform was coated on a glass substrate vapor-deposited with 1000-Å thick aluminium by doctor blade coating, and was then dried at 100°C for 1 hour to form an insulating layer having a thickness of 10 µm. On the other hand, ω-phenylic acid was added dropwise in water by a micropipet to form a monomolecular film of ω-phenylic acid on the surface of the water. Five monomolecular films, each as mentioned just above, were laminated on the above polyester resinous layer at a surface pressure of 30 dynes/cm² and a drawing-up speed of 1 cm/min. to a film thickness of 100 Å, followed by air-drying.

### Example 35

A mixed solution of 1 g of a polyester resin (Bylon 200) and 10 g of chloroform was coated on a glass substrate vapor-deposited with 1000-Å thick aluminium by doctor blade coating, and was then dried at 100°C for 1 hour, followed by further vapor-deposition of polyethylene to a film thickness of 100 Å.

### Example 36

The single layer organic photosensitive member of Ex. 12 was located in opposition to the electrostatic information recording medium 3 prepared in Ex. 32 through an air gap of 10 µm defined by a 10-µm thick polyester film used as the spacer. Then, a DC voltage of - 700 V was applied between both electrodes with the photosensitive member negatively and the recording medium positively. In that state, exposure was carried out from the back side of the photosensitive member for 1 second, while using as the light source a halogen lamp having a luminous intensity of 1000 lux, After the completion of the exposure, the voltage was shut off. A surface potential of - 100 V was measured on the exposed region of the recording medium by a surface electrometer, while a surface potential of 0 V was obtained on the unexposed region thereof.

Similar exposure was carried out, while a resolution pattern film was brought in close contact with the back side of the photosensitive member. Thereafter, the electrostatic information recording medium was subjected to X-Y axis scanning with a 50 × 50 µm probe surface for measuring microarea potentials to process potential data of 50 µm units, which were then displayed on a CRT by potential-brightness conversion on an enlarged scale. As a result, resolution patterns of up to 100 µm were confirmed on the CRT. After the exposure, the recording medium was permitted to stand at room temperature of 25°C and 35 R.H. for three months. Afterwards, similar reading by scanning indicated that resolution pattern displays quite similar to those just after the exposure were obtained.

For alternative exposure, a subject was photographed with an ordinary camera at an impression voltage of - 700 V, an exposure f=1.4 and a shutter speed of 1/60 sec. outdoors in the daytime. After the exposure, the electrostatic information recording medium was subjected to X-Y axis scanning with a 50 × 50 µm probe surface for measuring microarea potentials, which were then displayed on a CRT by potential-brightness conversion on an enlarged scale. As a result, imaging having gradiation was found to occur.

Color images were photographed in the following manners.
(1) Prismatic Three-Plane Splitting
   As illustrated in Figure 12, the R, G and B filters were disposed on three planes of a prism, and the same media as described above were set on the planes to photograph a subject at an exposure f=1.4 and a shutter speed of 1/30 sec.
(2) Color CRT Displaying
   The R, G and B latent images were read by scanning in a similar manner to form on a CRT fluorescences corresponding thereto, and the resulting images separated into three colors were compounded on the CRT to obtain a color image.

## Claims

1. An electrostatic information recording and reproducing method, wherein a photosensitive member (1) comprising a photoconductive layer (9) having an electrode (7) on a front surface thereof and an electrostatic information recording medium (3) comprising a charge retaining layer (11) having an electrode (13) on a back surface thereof are disposed at a face-to-face position and information exposure is performed from the photosensitive member side (1) or from the electrostatic information recording medium side (3) with voltage applied between both electrodes (7,13), and the electrostatic information recording medium (3) is separated from the photosensitive member (1) to reproduce and output a surface potential recorded on the electrostatic information recording medium (3), characterized in that said charge retaining layer (11) comprises an insulating high-molecular material, said high-molecular material having a glass transition temperature higher than an operating environmental temperature, a water absorption of 0.4% by weight or less, a film thickness of 0.1 µm to 100 µm, and a specific resistance of 10¹²Ω cm or greater.

2. An electrostatic information recording and reproducing method, wherein a photosensitive member (1) comprising a photoconductive layer (9) having an electrode (7) on a front surface thereof and an electrostatic information recording medium (3) comprising a charge retaining layer (11) having an electrode (13) on a back surface thereof are disposed at a face-to-face position and information exposure is performed from the photosensitive member side (1) or from the electrostatic information recording medium side (3) with voltage applied between both electrodes (7, 13), and the electrostatic information recording medium (3) is separated from the photosensitive member (1) to reproduce and output a surface potential recorded on the electrostatic information recording medium (3), characterized in that said charge retaining layer comprises a monomolecular film or monomolecular built-up film composed of an organic compound, said compound having a glass transition temperature higher than an operating environmental temperature, a water absorption of 0.4% by weight or less, a film thickness of 0.1 µm to 100 µm, and a specific resistance of 10¹² Ω cm or greater.

3. An electrostatic information recording medium comprising a highly insulating charge retaining layer (11,10) stacked on an electrode (13), characterized in that said charge retaining layer comprises a charge retainability reinforcing layer (10) and an insulating layer (11), said charge retainability reinforcing layer (10) comprising an inorganic insulating layer, an organic high-molecular insulating film, an organic insulating monomolecular film or a monomolecular built-up film having a thickness of 10 to 1,000 Å so that charges can be injected therein upon application of an electric field of 10⁴ V/cm or greater, and said insulating layer (11) having a glass transition temperature higher than an operating environmental temperature, a water absorption of 0.4% by weight or less, a film thickness of 0.1 µm to 100 µm, and a specific resistance of 10¹² Ω cm or greater so that no injection of charges therein occurs.

4. The electrostatic information recording medium according to Claim 3, characterized in that said charge retainability reinforcing layer (10) is formed on said electrode (13), and said insulating layer (11) is then formed thereon.

5. The electrostatic information recording medium according to Claim 3, characterized in that said insulating layer (11) is formed on said electrode (13), and said charge retainability reinforcing layer (10) is then formed thereon.

6. An electrostatic information recording apparatus where a photosensitive member (1) comprising a photoconductive layer (9) having an electrode (7) on a front surface thereof is located in opposition to an electrostatic information recording medium (3) having an electrode (13) on a back surface thereof and comprising a charge retaining layer (11) and information exposure is performed from the photosensitive member side (1) or from said electrostatic information recording medium side (3) with voltage applied between both electrodes (7, 13) characterised in that said charge retaining layer (11) comprises an insulating high-molecular material, said high-molecular material having a glass transition temperature higher than an operating environmental temperature, a water absorption of 0.4% by weight or less, a film thickness of 0.1 µm to 100 µm, and a specific resistance of 10¹² Ω cm or greater.

7. A photosensitive member to be used with the electrostatic information recording apparatus according to Claim 6, characterized in that a support (5) is provided thereon with an electrode (7), and said photoconductive layer (9) is stacked on said electrode.

## Patentansprüche

1. Elektrostatisches Informationsaufzeichnungs- und -wiedergabeverfahren, wobei ein lichtempfindlicher Abschnitt (1) umfassend eine lichtleitende Schicht (9) mit einer Elektrode (7) auf ihrer Vorderseite, und ein elektrostatisches Informationsaufzeichnungsmedium (3) umfassend eine Ladungshalteschicht (11) mit einer Elektrode (13) auf ihrer Rückseite einander gegenüberliegend angeordnet sind, und wobei das Aufbringen der Informationen von der Seite des lichtempfindlichen Abschnitts (1) erfolgt, oder von der Seite des elektrostatischen Informationsaufzeichnungsmediums (3), bei angelegter Spannung zwischen beiden Elektroden (7, 13) und wobei das elektrostatische Informationsaufzeichnungsmedium (3) getrennt ist von dem lichtempfindlichen Abschnitt (1), um ein Oberflächenpotenzial zu reproduzieren und auszugeben, das an dem elektrostatischen Informationsaufzeichnungsmedium (3) aufgezeichnet wird, dadurch gekennzeichnet, dass die Ladungshalteschicht (11) einen hochmolekularen Isolierstoff umfasst, dessen Glasübergangstemperatur höher als die Umgebungstemperatur ist, der eine Wasseraufnahme von 0,4 Gewichtsprozenten oder weniger, eine Filmdicke von 0,1 µm bis 100 µm, und einen spezifischen Widerstand von 10¹² Ωcm oder größer aufweist.

2. Elektrostatisches Informationsaufzeichnungs- und -wiedergabeverfahren, wobei ein lichtempfindlicher Abschnitt (1) umfassend eine lichtleitende Schicht (9) mit einer Elektrode (7) auf ihrer Vorderseite, und ein elektrostatisches Informationsaufzeichnungsmedium (3) umfassend eine Ladungshalteschicht (11) mit einer Elektrode (13) auf ihrer Rückseite einander gegenüberliegend angeordnet sind, und wobei das Aufbringen der Informationen von der Seite des lichtempfindlichen Abschnitts (1) erfolgt, oder von der Seite des elektrostatischen Informationsaufzeichnungsmediums (3), bei angelegter Spannung zwischen beiden Elektroden (7, 13) und wobei das elektrostatische Informationsaufzeichnungsmedium (3) getrennt ist von dem lichtempfindlichen Abschnitt (1), um ein Oberflächenpotenzial zu reproduzieren und auszugeben, das an dem elektrostatischen Informationsaufzeichnungsmedium (3) aufgezeichnet wird, dadurch gekennzeichnet, dass die Ladungshalteschicht einen monomolekularen Film oder einen monomolekular aufgebauten, aus einer organischen Verbundmasse zusammengesetzten Film umfasst, wobei die Verbundmasse eine Glasübergangstemperatur besitzt, die höher als die Umgebungstemperatur ist und eine Wasseraufnahme von 0,4 Gewichtsprozenten oder weniger, eine Filmdicke von 0,1 µm bis 100 µm, und einen spezifischen Widerstand von 10¹² Ωcm oder größer aufweist.

3. Elektrostatisches Informationsaufzeichnungsmedium umfassend eine auf einer Elektrode (13) angeordnete hochisolierende Ladungshalteschicht (11, 10), dadurch gekennzeichnet, dass die Ladungshalteschicht eine Verstärkungsschicht (10) zum Halten der Ladung und eine Isolierschicht (11) umfasst, wobei die Verstärkungsschicht (10) zum Halten der Ladung eine anorganische Isolierschicht umfasst, einen organischen hochmolekularen Isolierfilm, einen organischen monomolekularen Isolierfilm oder einen monomolekular aufgebauten Film mit einer Dicke von 10 bis 1.000 Å, so dass darin durch Anlegen eines elektrischen Felds von 10⁴ V/cm oder größer Ladungen erzeugt werden können, wobei die Isolierschicht (11) eine Glasübergangstemperatur besitzt, die höher als die Umgebungstemperatur ist und eine Wasseraufnahme von 0,4 Gewichtsprozenten oder weniger, eine Filmdicke von 0,1 µm bis 100 µm und einen spezifischen Widerstand von 10¹² Ωcm oder größer aufweist, so dass darin keine Ladungen entstehen.

4. Elektrostatisches Informationsaufzeichnungsmedium nach Anspruch 3, dadurch gekennzeichnet, dass die Verstärkungsschicht (10) zum Halten der Ladung an der Elektrode (13) angeformt ist, und die Isolierschicht (11) daran angeformt ist.

5. Elektrostatisches Informationsaufzeichnungsmedium nach Anspruch 3, dadurch gekennzeichnet, dass die Isolierschicht (11) an der Elektrode (13) angeformt ist, und die Verstärkungsschicht (10) zum Halten der Ladung daran angeformt ist.

6. Elektrostatische Informationsaufzeichnungsvorrichtung, wobei ein lichtempfindlicher Abschnitt (1), umfassend eine lichtleitende Schicht (9) mit einer Elektrode (7) auf ihrer Vorderseite gegenüberliegend zu einem elektrostatischen Informationsaufzeichnungsmedium (3) mit einer Elektrode (13) auf seiner Rückseite angeordnet ist, sowie umfassend eine Ladungshalteschicht (11), wobei das Aufbringen der Informationen von der Seite des lichtempfindlichen Abschnitts (1) oder von der Seite des elektrostatischen Informationsaufzeichnungsmediums (3) her bei angelegter Spannung zwischen beiden Elektroden (7, 13) erfolgt, dadurch gekennzeichnet, dass die Ladungshalteschicht (11) einen hochmolekularen Isolierstoff umfasst, dessen Glasübergangstemperatur höher als die Umgebungstemperatur ist und eine Wasseraufnahme von 0,4 Gewichtsprozenten oder weniger, eine Filmdicke von 0,1 µm bis 100 µm und einen spezifischen Widerstand von 10¹² Ωcm oder größer aufweist.

7. Lichtempfindlicher Abschnitt zum Gebrauch mit der elektrostatischen Informationsaufzeichnungsvorrichtung nach Anspruch 6, dadurch gekennzeichnet, dass er eine Halterung (5) mit der Elektrode (7) aufweist, und dass die lichtleitende Schicht (9) auf der Elektrode aufgesetzt ist.

## Revendications

1. Procédé d'enregistrement électrostatique et de reproduction d'informations, dans lequel un élément photosensible (1) comprenant une couche photoconductrice (9) ayant une électrode (7) sur une surface frontale de celle-ci et un support d'enregistrement électrostatique d'informations (3) comprenant une couche de retenue de charges (11) ayant une électrode (13) sur une surface arrière de celle-ci sont disposés dans une position face à face, et l'exposition de l'information est effectuée à partir du côté élément photosensible (1) ou à partir du côté support d'enregistrement électrostatique d'informations (3) avec une tension appliquée entre les deux électrodes (7, 13), et le support d'enregistrement électrostatique d'informations (3) est séparé de l'élément photosensible (1) pour reproduire et sortir un potentiel de surface enregistré sur le support d'enregistrement électrostatique d'informations (3), caractérisé en ce que ladite couche de retenue de charges (11) comprend un matériau isolant de poids moléculaire élevé, ledit matériau de poids moléculaire élevé ayant une température de transition vitreuse supérieure à une température environnementale de fonctionnement, une absorption d'eau de 0,4 % en poids ou moins, une épaisseur de film de 0,1 µm à 100 µm et une résistance spécifique de 10¹²Ω cm ou plus.

2. Procédé d'enregistrement électrostatique et de reproduction d'informations, dans lequel un élément photosensible (1) comprenant une couche photoconductrice (9) ayant une électrode (7) sur une surface frontale de celle-ci et un support d'enregistrement électrostatique d'informations (3) comprenant une couche de retenue de charges (11) ayant une électrode (13) sur une surface arrière de celle-ci sont disposés dans une position face à face, et l'exposition de l'information est effectuée à partir du côté élément photosensible (1) ou à partir du côté support d'enregistrement électrostatique d'informations (3) avec une tension appliquée entre les deux électrodes (7, 13), et le support d'enregistrement électrostatique d'informations (3) est séparé de l'élément photosensible (1) pour reproduire et sortir un potentiel de surface enregistré sur le support d'enregistrement électrostatique d'informations (3), caractérisé en ce que ladite couche de retenue de charges comprend un film monomoléculaire ou un film de structure monomoléculaire composé d'un composé organique, ledit composé ayant une température de transition vitreuse supérieure à une température environnementale de fonctionnement, une absorption d'eau de 0,4 % en poids ou moins, une épaisseur de film de 0,1 µm à 100 µm et une résistance spécifique de 10¹² Ω cm ou plus.

3. Support d'enregistrement électrostatique d'informations comprenant une couche de retenue de charges (11, 10) fortement isolante empilée sur une électrode (13), caractérisé en ce que ladite couche de retenue de charges comprend une couche (10) renforçant l'aptitude à retenir les charges et une couche isolante (11), ladite couche (10) renforçant l'aptitude à retenir les charges comprenant une couche isolante inorganique, un film isolant organique de poids moléculaire élevé, un film monomoléculaire isolant organique ou un film de structure monomoléculaire ayant une épaisseur de 10 à 1 000 Å, de sorte que des charges peuvent être injectées dans celui-ci par application d'un champ électrique de 10⁴ V/cm ou plus, et ladite couche isolante (11) ayant une température de transition vitreuse supérieure à une température environnementale de fonctionnement, une absorption d'eau de 0,4 % en poids ou moins, une épaisseur de film de 0,1 µm à 100 µm et une résistance spécifique de 10¹² Ω cm ou plus, de sorte qu'une injection de charges dans celle-ci n'apparaît pas.

4. Support d'enregistrement électrostatique d'informations selon la revendication 3, caractérisé en ce que ladite couche (10) renforçant l'aptitude à retenir les charges est formée sur ladite électrode (13), et ladite couche isolante (11) est formée ensuite sur celle-ci.

5. Support d'enregistrement électrostatique d'informations selon la revendication 3, caractérisé en ce que ladite couche isolante (11) est formée sur ladite électrode (13), et ladite couche (10) renforçant l'aptitude à retenir les charges est formée ensuite sur celle-ci.

6. Appareil d'enregistrement électrostatique d'informations dans lequel un élément photosensible (1) comprenant une couche photoconductrice (9) ayant une électrode (7) sur une surface frontale de celle-ci est situé à l'opposé d'un support d'enregistrement électrostatique d'informations (3) ayant une électrode (13) sur une surface arrière de celle-ci et comprenant une couche de retenue de charges (11), et l'exposition de l'information est effectuée à partir du côté élément photosensible (1) ou à partir du côté support d'enregistrement électrostatique d'informations (3) avec une tension appliquée entre les deux électrodes (7, 13), caractérisé en ce que ladite couche de retenue de charges (11) comprend un matériau isolant de poids moléculaire élevé, ledit matériau de poids moléculaire élevé ayant une température de transition vitreuse supérieure à une température environnementale de fonctionnement, une absorption d'eau de 0,4 % en poids ou moins, une épaisseur de film de 0,1 µm à 100 µm et une résistance spécifique de 10¹² Ω cm ou plus.

7. Elément photosensible à utiliser avec l'appareil d'enregistrement électrostatique d'informations selon la revendication 6, caractérisé en ce qu'un support (5) est pourvu à sa surface d'une électrode (7), et ladite couche photoconductrice (9) est empilée sur ladite électrode.
